(19) Europäisches Patentamt
European Patent Office
Office européen des brevets

(11) EP 4 340 282 A1

(12) EUROPEAN PATENT APPLICATION
published in accordance with Art. 153(4) EPC

(43) Date of publication:
**20.03.2024 Bulletin 2024/12**

(21) Application number: **22807773.1**

(22) Date of filing: **10.05.2022**

(51) International Patent Classification (IPC):
***H04L 5/00*** *(2006.01)* ***H04L 1/00*** *(2006.01)*
***H04W 72/04*** *(2023.01)* ***H04W 72/12*** *(2023.01)*

(52) Cooperative Patent Classification (CPC):
**H04L 1/00; H04L 5/00; H04W 72/04; H04W 72/12;**
Y02D 30/70

(86) International application number:
**PCT/KR2022/006632**

(87) International publication number:
**WO 2022/240125 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.05.2021 KR 20210060564**

(71) Applicant: **LG Electronics Inc.**
**Yeongdeungpo-gu**
**Seoul 07336 (KR)**

(72) Inventors:
- **KANG, Jiwon**
  **Seoul 06772 (KR)**
- **YANG, Suckchel**
  **Seoul 06772 (KR)**
- **BAE, Duckhyun**
  **Seoul 06772 (KR)**
- **KIM, Seonwook**
  **Seoul 06772 (KR)**
- **HWANG, Seunggye**
  **Seoul 06772 (KR)**
- **LEE, Sunghoon**
  **Seoul 06772 (KR)**

(74) Representative: **Plasseraud IP**
**66, rue de la Chaussée d'Antin**
**75440 Paris Cedex 09 (FR)**

(54) **METHOD AND APPARATUS FOR TRANSMITTING AND RECEIVING WIRELESS SIGNAL IN WIRELESS COMMUNICATION SYSTEM**

(57) Disclosed are a method and apparatus for transmitting or receiving a wireless signal in a wireless communication system. The method for transmitting and receiving a wireless signal, according to an embodiment of the present disclosure, may comprise the steps of: receiving, from a base station, configuration information related to transmission and reception of a wireless signal, wherein the configuration information includes information regarding one or more parameters for the transmission and reception of the wireless signal; receiving control information related to the transmission and reception of the wireless signal, wherein the control information includes information regarding at least one adjustment value of the one or more parameters; and transmitting and receiving the wireless signal on the basis of the configuration information and the control information. The adjustment value may be an update value for a corresponding parameter or a difference value with respect to the corresponding parameter.

FIG.21

Receive configuration information related to wireless signal transmission and reception
S2101
Receive control information related to wireless signal transmission and reception
S2102
Perform wireless signal transmission and reception
S2103

EP 4 340 282 A1

## Description

[Technical Field]

The present disclosure relates to a wireless communication system, and in more detail, relates to a method and an apparatus for transmitting and receiving an uplink/downlink wireless signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving an uplink/downlink wireless signal in a wireless communication system.

In addition, an additional technical object of the present disclosure is to provide a method and an apparatus for transmitting and receiving a wireless signal based on dynamic adjustment of a physical layer resource location and a transmission parameter in an evolved wireless communication system.

The technical objects to be achieved by the present disclosure are not limited to the above-described technical objects, and other technical objects which are not described herein will be clearly understood by those skilled in the pertinent art from the following description.

[Technical Solution]

A method of performing transmission and reception of a wireless signal in a wireless communication system according to an aspect of the present disclosure may include: receiving, from a base station, configuration information related to transmission and reception of a wireless signal, wherein the configuration information includes information on one or more parameters for transmission and reception of the wireless signal; receiving, from a base station, control information related to transmission and reception of the wireless signal, wherein the control information including information on at least one adjustment value of the one or more parameters; and performing transmission and reception of the wireless signal based on the configuration information and the control information. The adjustment value may be an update value for a corresponding parameter or a difference value compared to a corresponding parameter.

A method of performing transmission and reception of a wireless signal in a wireless communication system according to an additional aspect of the present disclosure may include: transmitting, to a terminal, configuration information related to transmission and reception of a wireless signal, wherein the configuration information includes information on one or more parameters for transmission and reception of the wireless signal; transmitting, to the terminal, control information related to transmission and reception of the wireless signal, wherein the control information including information on at least one adjustment value of the one or more parameters; and performing transmission and reception of the wireless signal based on the configuration information and the control information. The adjustment value may an update value for a corresponding parameter or a difference value compared to a corresponding parameter.

[Technical Effects]

According to an embodiment of the present disclosure, dynamic system resource optimization based on an evolved wireless communication system can be supported.

In addition, resource control and a transmission parameter for transmission and reception of a wireless signal can be adjusted to appropriate for dynamic optimization based on an evolved wireless communication system.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of multiple TRPs transmission in a wireless communication system to which the present disclosure may be applied.
FIG. 8 is a diagram illustrating a downlink transmission and reception operation in a wireless communication system to which the present disclosure can be applied.
FIG. 9 is a diagram illustrating an uplink transmission and reception operation in a wireless communication system to which the present disclosure can be applied.
FIG. 10 illustrates a classification of artificial intelligence.
FIG. 11 illustrates a feed-forward neural network.
FIG. 12 illustrates a recurrent neural network.
FIG. 13 illustrates a convolutional neural network.
FIG. 14 illustrates an auto encoder.
FIG. 15 illustrates a functional framework for an AI operation.
FIG. 16 is a diagram illustrating split AI inference.
FIG. 17 illustrates an application of a functional framework in a wireless communication system.
FIG. 18 illustrates an application of a functional framework in a wireless communication system.
FIG. 19 illustrates an application of a functional framework in a wireless communication system.
FIG. 20 is a diagram illustrating a signaling procedure between a base station and a terminal for a wireless signal transmission and reception method according to an embodiment of the present disclosure.
FIG. 21 is a diagram illustrating an operation of a terminal for a wireless signal transmission and reception method according to an embodiment of the present disclosure.
FIG. 22 is a diagram illustrating an operation of a base station for a wireless signal transmission and reception method according to an embodiment of the present disclosure.
FIG. 23 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

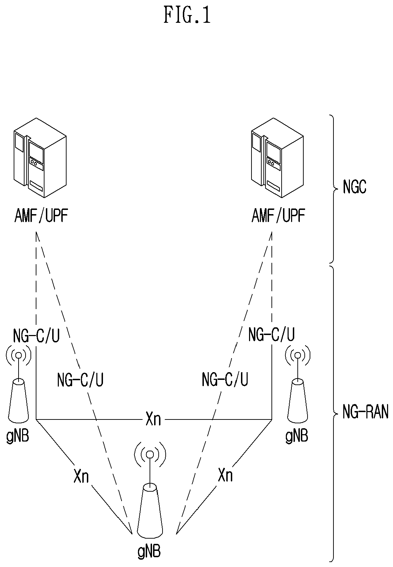

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

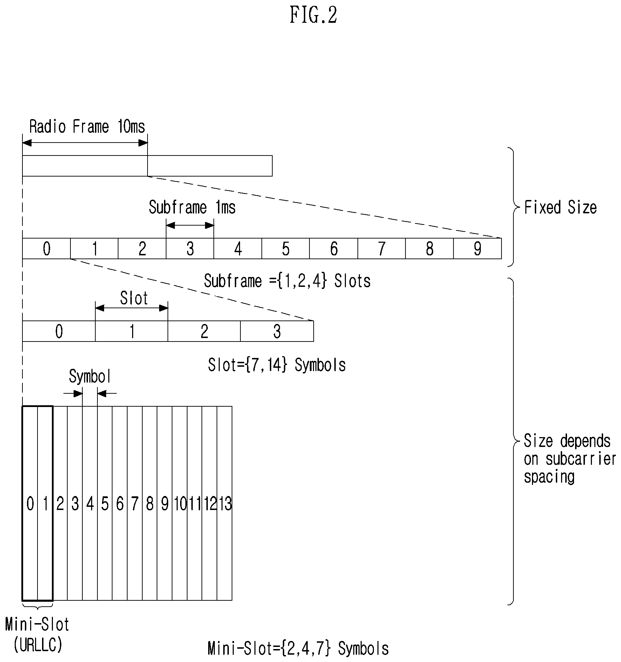

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is 480-103 Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |

(continued)

| $\mu$ | $N_{symb}^{slot}$ | $N_{slot}^{frame,\mu}$ | $N_{slot}^{subframe,\mu}$ |
|---|---|---|---|
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

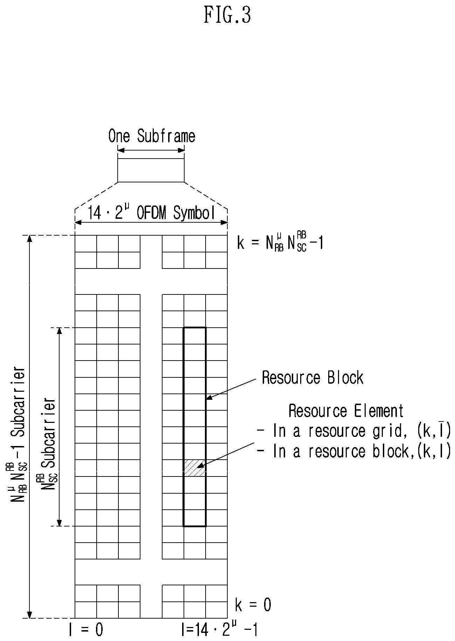

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0, ..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,. . . , $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

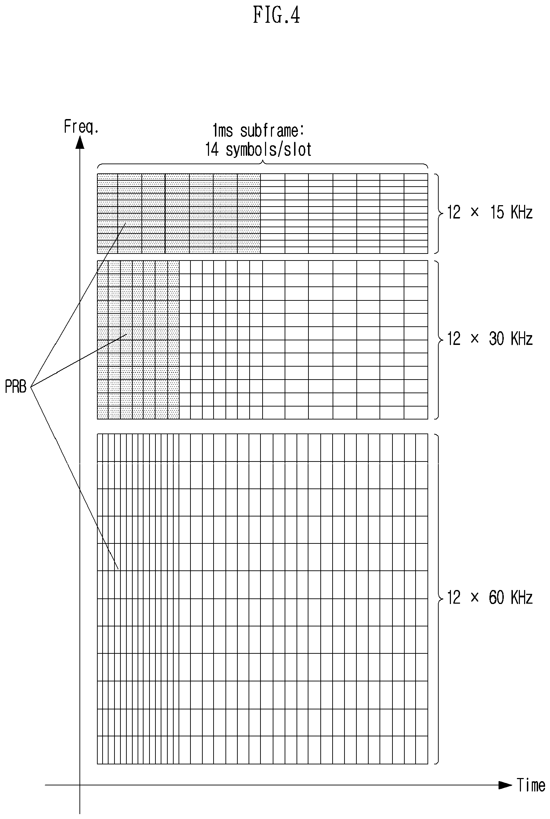

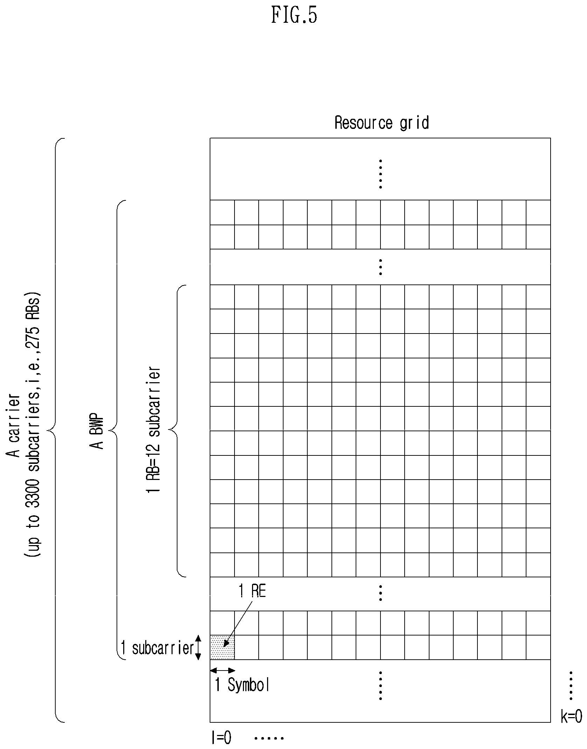

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

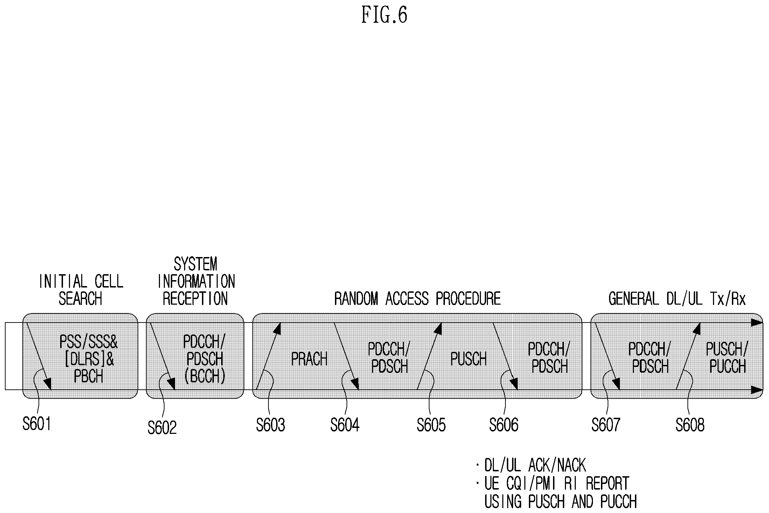

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, MTRP-URLLC may mean that a M TRPs transmit the same transport block(TB) by using different layer/time/frequency. A UE configured with a MTRP-URLLC transmission scheme receives an indication on multiple TCI state(s) through DCI and may assume that data received by using a QCL RS of each TCI state are the same TB. On the other hand, MTRP-eMBB may mean that M TRPs transmit different TBs by using different layer/time/frequency. A UE configured with a MTRP-eMBB transmission scheme receives an indication on multiple TCI state(s) through DCI and may assume that data received by using a QCL RS of each TCI state are different TBs. In this regard, as UE separately classifies and uses a RNTI configured for MTRP-URLLC and a RNTI configured for MTRP-eMBB, it may decide/determine whether the corresponding M-TRP transmission is URLLC transmission or eMBB transmission. In other words, when CRC masking of DCI received by UE is performed by using a RNTI configured for MTRP-URLLC, it may correspond to URLLC transmission, and when CRC masking of DCI is performed by using a RNTI configured for MTRP-eMBB, it may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

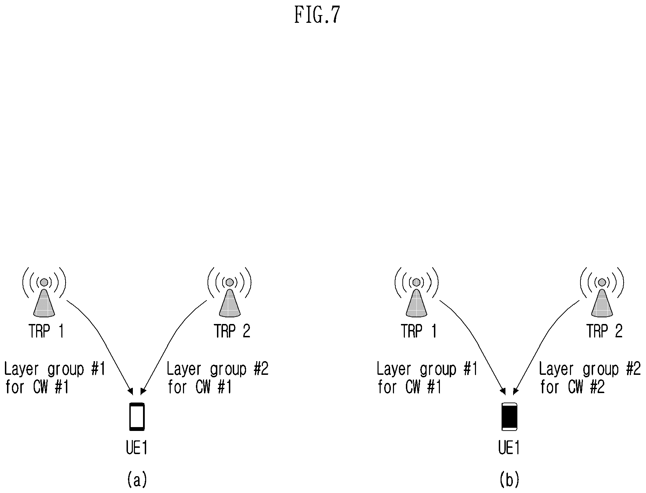

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

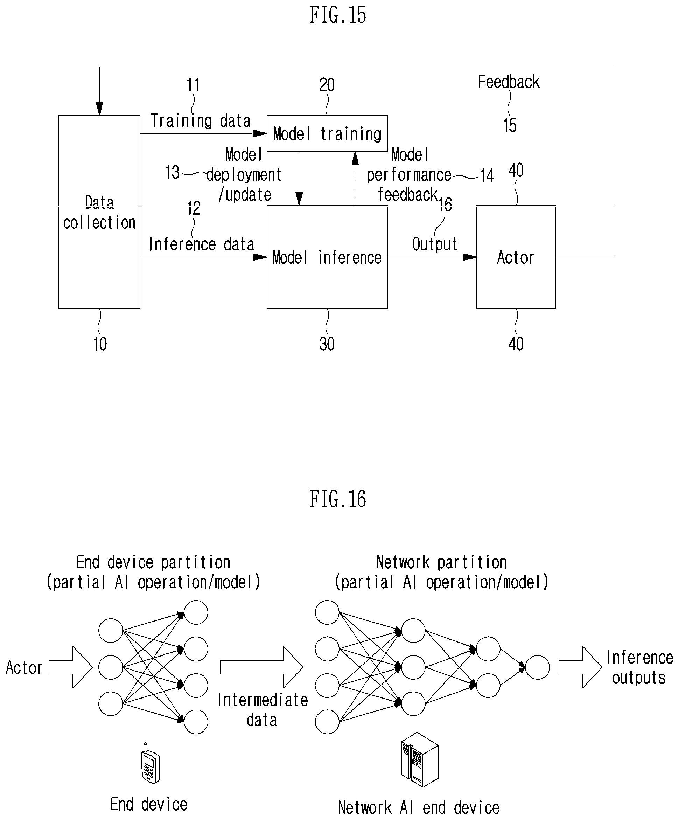

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 15(b), it may have a disadvantage that a code rate corresponding to a TB is higher compared to FIG. 15 (a) . However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Downlink transmission and reception operation

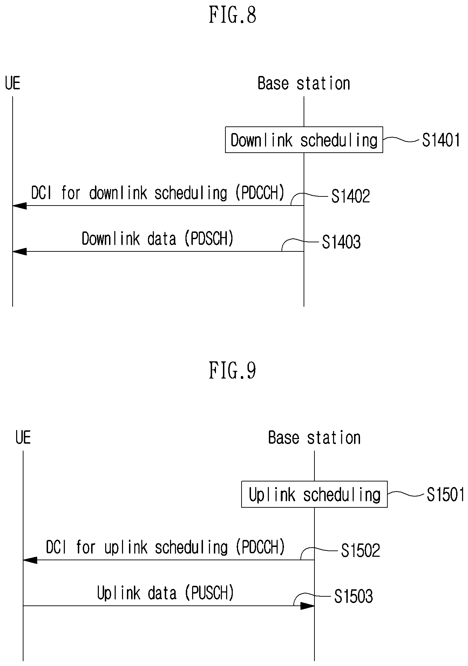

FIG. 8 is a diagram illustrating a downlink transmission and reception operation in a wireless communication system to which the present disclosure can be applied.

Referring to FIG. 8, a base station schedules downlink transmission such as a frequency/time resource, a transport layer, a downlink precoder, an MCS, etc. (S1401). In particular, a base station can determine a beam for PDSCH transmission to a UE through the operations described above.

A UE receives DCI for downlink scheduling (i.e., including scheduling information of a PDSCH) from a base station on a PDCCH (S1402).

DCI format 1_0, 1_1, or 1_2 may be used for downlink scheduling, and in particular, DCI format 1_1 includes the following information: an identifier for a DCI format, a bandwidth part indicator, a frequency domain resource assignment, a time domain resource assignment, a PRB bundling size indicator, a rate matching indicator, a ZP CSI-RS trigger, antenna port(s), a transmission configuration indication (TCI), an SRS request, a DMRS (Demodulation Reference Signal) sequence initialization

In particular, a number of DMRS ports may be scheduled according to each state indicated in an antenna port(s) field, and also single-user (SU)/multi-user (MU) user transmission scheduling is possible.

In addition, a TCI field is composed of 3 bits, and a QCL for a DMRS is dynamically indicated by indicating up to 8 TCI states according to a TCI field value.

A UE receives downlink data from a base station on a PDSCH (S1403).

When a UE detects a PDCCH including DCI formats 1_0, 1_1, and 1_2, it decodes a PDSCH according to indications by corresponding DCI.

Here, when a UE receives a PDSCH scheduled by DCI format 1, a DMRS configuration type may be configured for the UE by a higher layer parameter 'dmrs-Type', and a DMRS type is used to receive a PDSCH. In addition, a maximum number of front-loaded DMRA symbols for the PDSCH may be configured for a terminal by a higher layer parameter 'maxLength'.

For DMRS configuration type 1, if a single codeword is scheduled for a UE and an antenna port mapped to an index of {2, 9, 10, 11 or 30} is indicated or if a single codeword is scheduled and an antenna port mapped to an index of {2, 9, 10, 11 or 12} or {2, 9, 10, 11, 30 or 31} is indicated, or if two codewords are scheduled, the UE assumes that all remaining orthogonal antenna ports are not associated with PDSCH transmission to another UE.

Alternatively, for DMRS configuration type 1, if a single codeword is scheduled for a UE and an antenna port mapped to an index of {2, 10 or 23} is indicated, or if a single codeword is scheduled and an antenna port mapped to an index of {2, 10, 23 or 24} or {2, 10, 23 or 58} is indicated, or if two codewords are scheduled for a UE, the UE assumes that all remaining orthogonal antenna ports are not associated with PDSCH transmission to another UE.

When a UE receives a PDSCH, a precoding unit (precoding granularity) P' may be assumed to be a contiguous resource block in a frequency domain. Here, P' may correspond to one of {2, 4, wideband}.

If P' is determined to be wideband, a UE does not expect to be scheduled with non-contiguous PRBs, and a UE can assume that the same precoding is applied to allocated resources.

On the other hand, if P' is determined to be one of {2, 4}, a precoding resource block group (PRG) is divided into P' consecutive PRBs. An actual number of consecutive PRBs in each PRG may be one or more. A UE may assume that the same precoding is applied to consecutive downlink PRBs within a PRG.

In order for a UE to determine a modulation order, a target code rate, and a transport block size in a PDSCH, the UE first reads a 5-bit MCD field in DCI and determines a modulation order and a target code rate. Then, the UE reads a redundancy version field in the DCI and determines a redundancy version. Then, a UE determines a transport block size using a number of layers and a total number of allocated PRBs before rate matching.

1) Downlink semi-persistent scheduling (SPS)

Downlink SPS combines persistent scheduling through higher layer signaling (RRC, etc.) and dynamic scheduling through lower layer signaling (DCI, etc.). Persistent scheduling is used for periodic resource allocation for the first transmission of a transport block (TB). Dynamic scheduling is used to allocate resources for retransmission when retransmission is required.

Although not shown in FIG. 8, persistent scheduling through higher layer signaling (RRC, etc.) may be transmitted before dynamic scheduling (S1402) of lower layer signaling (DCI, etc.).

A UE can report support of SPS to a base station using a downlinkSPS flag in UE capability information.

For SPS, RRC signaling and physical layer signaling on a PDCCH are used in combination. RRC signaling (e.g., SPS-Config IE) provides a subset of resource allocation information, and additional information is provided by a PDCCH. Additionally, a PDCCH is used as a trigger for activation/release.

Table 6 shows an example of SPS-Config IE. SPS-Config IE is used to configure downlink semi-persistent transmission. Multiple downlink SPS configurations can be configured within one BWP of a serving cell.

【Table 6】

```
-- ASN1START
-- TAG-SPS-CONFIG-START

SPS-Config ::=                    SEQUENCE {
    periodicity                       ENUMERATED {ms10, ms20, ms32, ms40, ms64, ms80, ms128,
ms160, ms320, ms640,
                                                        spare6, spare5, spare4, spare3,
spare2, spare1},
    nrofHARQ-Processes                INTEGER (1..8),
    n1PUCCH-AN                        PUCCH-ResourceId
OPTIONAL,   -- Need M
    mcs-Table                         ENUMERATED {qam64LowSE}
OPTIONAL,   -- Need S
    ...,
    [[
    sps-ConfigIndex-r16               SPS-ConfigIndex-r16
OPTIONAL,   -- Cond SPS-List
    harq-ProcID-Offset-r16            INTEGER (0..15)
OPTIONAL,   -- Need R
    periodicityExt-r16                INTEGER (1..5120)
OPTIONAL,   -- Need R
    harq-CodebookID-r16               INTEGER (1..2)
OPTIONAL,   -- Need R
    pdsch-AggregationFactor-r16       ENUMERATED {n1, n2, n4, n8 }
OPTIONAL    -- Need S
    ]]
}

-- TAG-SPS-CONFIG-STOP
-- ASN1STOP
```

In Table 6, the periodicity represents a period of downlink SPS, which means a time interval between consecutive persistent resource allocations. The periodicityExt is used to calculate a period of downlink SPS, and if this parameter does not exist, the periodicity is ignored. An SPS period supports different values depending on the configured subcarrier spacing.

The nrofHARQ-Processes indicates a number of a HARQ process configured for downlink SPS. For dynamic resource allocation, a HARQ process identifier is specified within DCI associated with each resource allocation. However, in downlink SPS, a HARQ process identifier is determined based on a value of the nrofHARQ-Processes and a value of the periodicity.

The n1PUCCH-AN indicates a HARQ resource of a PUCCH for downlink SPS. An actual PUCCH-Resource is configured according to a value of the n1PUCCH-AN, and based on this, a PUCCH resource for transmitting a HARQ ACK to a base station is identified.

The mcs-Table indicates an MCS table used by a UE for downlink SPS.

The pdsch-AggregationFactor represents a repetition number of an SPS PDSCH and can have one value among {1,2,4,8}. If this field does not exist, a UE applies the pdsch-AggregationFactor of PDSCH-Config. That is, a UE repeatedly receives the same downlink data/transport block (TB) in consecutive slots.

When receiving a scheduled PDSCH without transmitting a corresponding PDCCH using SPS-config, the same symbol allocation is applied over consecutive slots according to the configured repetition number (pdsch-AggregationFactor). That is, a UE repeatedly receives a downlink TB from the same symbol over several consecutive slots according to the configured repetition number. When repetitive transmission is configured, a PDSCH is limited to a single transmission layer.

In a PDSCH scheduled without corresponding PDCCH transmission using SPS-config, a time interval for reception according to the number of repetitions (pdsch-AggregationFactor) is not greater than a period interval derived by a period obtained from SPS-config.

A redundancy version (rv_id) is determined differently for each TO of a TB. For a PDSCH scheduled without corresponding PDCCH transmission using SPS-config, a redundancy version indicated by DCI is assumed to be 0.

When a UE configured with SPS in a higher layer receives DCI on a PDCCH, the UE first verifies whether a downlink SPS assignment PDCCH is valid.

i) A CRC in a DCI format is scrambled by a CS (Configured Scheduling)-RNTI; and
ii) a new data indicator (NDI) in a DCI format for a TB is set to 0; and
iii) When validation is for scheduling activation, and a PDSCH-to-HARQ feedback timing indicator field in a DCI format is present, if the PDSCH-to-HARQ feedback timing indicator field does not provide an inapplicable value,

A UE determines that a downlink SPS assignment PDCCH is valid for scheduling activation/scheduling release.

Next, a UE verifies whether a DCI format is valid as follows.

When a UE is provided with a single configuration for an SPS PDSCH, verification of a DCI format is achieved when all fields of a DCI format are set according to Table 7 or Table 8 below.

Table 7 illustrates fields for verifying single downlink SPS scheduling activation when a UE is provided with a single SPS PDSCH configuration in a downlink BWP of a scheduled cell.

[Table 7]

| | DCI format 1_1 |
|---|---|
| HARQ process number | set to all '0's |
| Redundancy version | For the enabled transport block: set to all '0's |

Table 8 illustrates fields for verifying single downlink SPS scheduling release when a UE is provided with a single SPS PDSCH configuration in a downlink BWP of a scheduled cell.

[Table 8]

| | DCI format 1_0/1_1/1_2 |
|---|---|
| HARQ process number | set to all '0's |
| Redundancy version | set to all '0's |
| Modulation and coding scheme | set to all '1's |
| Frequency domain resource assignment | - set to all '0's for FDRA Type 0 or for dynamicSwitch<br>- set to all '1's for FDRA Type 1 |

When a UE is provided with one or more SPS PDSCH configurations, when a HARQ process number field in a DCI format indicated to activate an SPS PDSCH configuration with the same value as an index (i.e., sps-ConfigIndex) of a specific configuration among one or more SPS PDSCH configurations, and when a redundancy version (RV) field of a DCI format is set as shown in Table 7 above, verification of a DCI format for SPS PDSCH activation is achieved.

When a UE is provided with one or more SPS PDSCH configurations, when a HARQ process number field in a DCI format indicates to release an SPS PDSCH with the same value as an index (i.e., sps-ConfigDeactivationStateList or sps-ConfigIndex) of a specific configuration among one or more SPS PDSCH configurations, and when RV, MCS (modulation and coding scheme), and FDRA (frequency domain resource assignment) fields of a DCI format are all set as shown in Table 8, verification of a DCI format for SPS PDSCH release is achieved.

2) PDSCH repetition

A UE may be configured to repeatedly receive a PDSCH. In this case, a UE repeatedly receives the same downlink data/transport block (TB) in consecutive slots.

The number of repetitions for a downlink TB (e.g., higher layer parameter pdsch-AggregationFactor) may have one of {2, 4, 8} values. That is, the same TB can be transmitted in 2 consecutive slots, 4 slots, or 8 slots. There is one TB transmission (i.e., one transmission occasion (TO)) within each slot. If the number of repetitions is not set (i.e., if there is no pdsch-AggregationFactor), a UE applies a value of 1.

When a UE receives a PDSCH scheduled by DCI, if the UE is configured with repetition number > 1 (e.g., pdsch-AggregationFactor > 1), the same symbol allocation is applied across consecutive slots according to the configured number of repetitions. That is, a UE repeatedly receives a downlink TB from the same symbol over several consecutive slots according to the configured repetition number. When repetitive transmission is configured, a PDSCH is limited to a single transmission layer.

A redundancy version (rv_id) is determined differently for each TO of a TB. That is, based on a redundancy version indicated by DCI scheduling a PDSCH, a redundancy version applied to the n-th TO is determined according to Table 9 below.

Table 9 illustrates aredundancy version applied when pdsch-AggregationFactor exists.

[Table 9]

| rv_id indicated by the DCI scheduling the PDSCH | rv_id to be applied to nth transmission occasion | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

Uplink transmission and reception operation

FIG. 9 is a diagram illustrating an uplink transmission and reception operation in a wireless communication system to which the present disclosure can be applied.

Referring to FIG. 9, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

DCI format 0_0, 0_1, or 0_2 may be used for uplink scheduling, and in particular, DCI format 0_1 includes the following information: an identifier for a DCI format, a UL/SUL (supplementary uplink) indicator, a bandwidth part indicator, a frequency domain resource assignment, a time domain resource assignment, a frequency hopping flag, a modulation and coding scheme (MCS), an SRS resource indicator (SRI), precoding information and number of layers, antenna port(s), an SRS request, a DMRS sequence initialization, a UL-SCH (Uplink Shared Channel) indicator

In particular, SRS resources configured in an SRS resource set associated with the higher upper layer parameter 'usage' may be indicated by an SRS resource indicator field. Additionally, the 'spatialRelationInfo' can be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission: codebook-based transmission and non-codebook-based transmission:

i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured. Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n).

ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator'. A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

1) Uplink configured grant

PUSCH configured grant is divided into CG (configured grant) Type 1 and CG Type 2.

In CG Type 1, resource allocation is completely configured or released using RRC signaling. When CG Type 1 is configured, a UE is allocated a resource set that can periodically transmit a PUSCH. A PDCCH is required only when retransmission is necessary. CG Type 1 PUSCH transmission is semi-statically configured to operate when receiving the higher layer parameter configuredGrantConfig including rrc-ConfiguredUplinkGrant without detection of a UL grant in DCI. A UE can perform PUSCH transmission according to the configured CG Type 1 until additional RRC signaling is reconfigured to the UE.

In CG Type 2, resource allocation is partially configured using RRC signaling, and activation/deactivation is indicated using PDCCH transmission. Since a PDCCH also provides time and frequency resource allocation, resource allocation may vary each time it is activated. CG Type 2 PUSCH transmission is scheduled semi-persistently by a UL grant in valid activation DCI after receipt of the higher layer parameter configuredGrantConfig that does not include rrc-ConfiguredUplinkGrant.

Although not shown in FIG. 9, higher layer signaling (RRC, etc.) for a PUSCH configured grant may be transmitted before lower layer signaling (DCI, etc.) for uplink scheduling.

One or more CG configurations of CG Type 1 and/or CG Type 2 may be activated simultaneously on an activated BWP of a serving cell.

In PUSCH transmission corresponding to CG Type 1 or CG Type 2, parameters for PUSCH transmission may be provided by configuredGrantConfig.

Table 10 shows an example of configuredGrantConfig IE. configuredGrantConfig IE is used to configure uplink transmission without dynamic grant by DCI. An actual uplink grant may be configured by RRC (CG Type 1) or provided through a PDCCH (by CS-RNTI) (CG Type 2). Multiple CG configurations can be configured within one BWP of a serving cell.

【Table 10】

```
-- ASN1START
-- TAG-CONFIGUREDGRANTCONFIG-START

ConfiguredGrantConfig ::=           SEQUENCE {
    frequencyHopping                    ENUMERATED {intraSlot, interSlot}
OPTIONAL,   -- Need S
    cg-DMRS-Configuration               DMRS-UplinkConfig,
    mcs-Table                           ENUMERATED {qam256, qam64LowSE}
OPTIONAL,   -- Need S
    mcs-TableTransformPrecoder          ENUMERATED {qam256, qam64LowSE}
OPTIONAL,   -- Need S
    uci-OnPUSCH                         SetupRelease { CG-UCI-OnPUSCH }
OPTIONAL,   -- Need M
    resourceAllocation                  ENUMERATED { resourceAllocationType0,
resourceAllocationType1, dynamicSwitch },
    rbg-Size                            ENUMERATED {config2}
OPTIONAL,   -- Need S
    powerControlLoopToUse               ENUMERATED {n0, n1},
    p0-PUSCH-Alpha                      P0-PUSCH-AlphaSetId,
```

```
    transformPrecoder                    ENUMERATED {enabled, disabled}
OPTIONAL,   -- Need S
    nrofHARQ-Processes                   INTEGER(1..16),
    repK                                 ENUMERATED {n1, n2, n4, n8},
    repK-RV                              ENUMERATED {s1-0231, s2-0303, s3-0000}
OPTIONAL,   -- Need R
    periodicity                          ENUMERATED {
                                                 sym2, sym7, sym1x14, sym2x14, sym4x14,
sym5x14, sym8x14, sym10x14, sym16x14, sym20x14,
                                                 sym32x14, sym40x14, sym64x14, sym80x14,
sym128x14, sym160x14, sym256x14, sym320x14, sym512x14,
                                                 sym640x14, sym1024x14, sym1280x14,
sym2560x14, sym5120x14,
                                                 sym6, sym1x12, sym2x12, sym4x12, sym5x12,
sym8x12, sym10x12, sym16x12, sym20x12, sym32x12,
                                                 sym40x12, sym64x12, sym80x12, sym128x12,
sym160x12, sym256x12, sym320x12, sym512x12, sym640x12,
                                                 sym1280x12, sym2560x12
    },
    configuredGrantTimer                 INTEGER (1..64)
OPTIONAL,   -- Need R
    rrc-ConfiguredUplinkGrant            SEQUENCE {
        timeDomainOffset                     INTEGER (0..5119),
        timeDomainAllocation                 INTEGER (0..15),
        frequencyDomainAllocation            BIT STRING (SIZE(18)),
        antennaPort                          INTEGER (0..31),
        dmrs-SeqInitialization               INTEGER (0..1)
OPTIONAL,   -- Need R
        precodingAndNumberOfLayers           INTEGER (0..63),
        srs-ResourceIndicator                INTEGER (0..15)
OPTIONAL,   -- Need R
        mcsAndTBS                            INTEGER (0..31),
        frequencyHoppingOffset               INTEGER (1.. maxNrofPhysicalResourceBlocks-1)
OPTIONAL,   -- Need R
        pathlossReferenceIndex               INTEGER (0..maxNrofPUSCH-
PathlossReferenceRSs-1),
        ...,
        [[
        pusch-RepTypeIndicator-r16           ENUMERATED {pusch-RepTypeA,pusch-RepTypeB}
OPTIONAL,   -- Need M
        frequencyHoppingPUSCH-RepTypeB-r16  ENUMERATED {interRepetition, interSlot}
OPTIONAL,   -- Cond RepTypeB
        timeReferenceSFN-r16                 ENUMERATED {sfn512}
OPTIONAL    -- Need S
        ]]
    }
OPTIONAL,   -- Need R
    ...,
```

In Table 10, the periodicity represents a period for uplink CG transmission, which means a time interval between consecutive continuous resource allocations. The periodicityExt is used to calculate a period of a uplink CG, and if this parameter does not exist, the periodicity is ignored. Values supported for an uplink CG period vary depending on the configured subcarrier spacing.

The nrofHARQ-Processes indicates a number of a HARQ process configured for an uplink CG. For dynamic resource allocation, a HARQ process identifier is specified within DCI associated with each resource allocation. However, in an uplink CG, an identifier of a HARQ process is determined based on a value of the nrofHARQ-Processes and a value of the periodicity.

The repK represents the number of repetitions. That is, it indicates a repetition level for each PUSCH transmission. The repK can have one of the following values: {1,2,4,8}. For CG Type 1, if the pusch-RepTypeIndicator in rrc-ConfiguredUplinkGrant indicates 'pusch-RepTypeB', PUSCH repetition type B is applied, otherwise, PUSCH repetition type A is applied. In the case of CG Type 2, a PUSCH repetition type is determined by a UL grant of DCI. According to the configured PUSCH repetition type A or B, a UE transmits an uplink TB repeatedly as many times as the configured repetition number.

The repK-RV represents a redundancy version sequence. The repK-RV is configured when a repetition is used (i.e., repK is set to one of {2,4,8}).

The resourceAllocation indicates a configuration of bitmap-based resource allocation type 0 or resource indication value (RIV)-based resource allocation type 1.

The mcs-Table indicates an MCS table used by a UE for a PUSCH in which a transform precoding is not used, and the mcs-TableTransformPrecoder indicates an MCS table used by a UE for a PUSCH in which a transform precoding is used. The transformPrecoder indicates whether a transform precoding is enabled for a PUSCH.

The rrc-ConfiguredUplinkGrant is a configuration for CG Type 1 transmission. If this field does not exist, a UE uses an UL grant configured by DCI with a CS-RNTI (i.e., CG Type 2). The timeDomainAllocation indicates a start symbol and a length of a PUSCH and a PUSCH mapping type. The timeDomainOffset represents an offset related to a reference SFN (system frame number) indicated by the timeReferenceSFN. The timeReferenceSFN indicates an SFN used to determine an offset of a resource in a time domain. A UE uses an SFN closest to a number indicated before receiving a configured grant configuration, and if this field does not exist, a reference SFN is 0.

When a UE configured a configured grant by a higher layer receives DCI on a PDCCH, the UE first verifies whether the configured UL grant Type 2 PDDCH is valid.

i) A CRC in a DCI format is scrambled by a CS (Configured Scheduling)-RNTI; and
ii) a new data indicator (NDI) in a DCI format for a TB is set to 0; and
iii) When validation is for scheduling activation, and a PDSCH-to-HARQ feedback timing indicator field in a DCI format is present, if the PDSCH-to-HARQ feedback timing indicator field does not provide an inapplicable value,

A UE determines that the configured UL grant Type 2 PDDCH for scheduling activation/scheduling release is valid.

Next, a UE verifies whether a DCI format is valid as follows.

When a UE is provided with a single configuration for UL grant Type 2 PUSCH, verification of a DCI format is achieved when all fields of the DCI format are configured according to Table 11 or Table 12 below.

Table 11 illustrates fields for verification of single UL grant Type 2 scheduling activation when a UE is provided with a single UL grant Type 2 configuration in an uplink BWP of a scheduled cell.

[Table 11]

| | DCI format 0_0/0_1/0_2 |
|---|---|
| HARQ process number | set to all '0's |
| Redundancy version | set to all '0's |

Table 12 illustrates fields for verification of single UL grant Type 2 scheduling release when a UE is provided with a single UL grant Type 2 configuration in an uplink BWP of a scheduled cell.

[Table 12]

| | DCI format 0_0/0_1/0_2 |
|---|---|
| HARQ process number | set to all '0's |
| Redundancy version | set to all '0's |
| Modulation and coding scheme | set to all '1's |
| Frequency domain resource assignment | - set to all '0's for FDRA Type 2 with $\mu$=1<br>- set to all '1's, otherwise |

When a UE is provided with one or more UL grant Type 2 PUSCH configurations, when a HARQ process number field in a DCI format indicates UL grant Type 2 PUSCH configuration activation with a value equal to the index (i.e., ConfiguredGrantConfigIndex) of a specific configuration among one or more UL grant Type 2 PUSCH configurations, and when a RV (redundancy version) field of a DCI format is configured as shown in Table 11 above, verification of the DCI format for UL grant Type 2 PUSCH activation is achieved.

When a UE is provided with one or more UL grant Type 2 PUSCH configurations, when a HARQ process number field in a DCI format indicates release of the UL grant Type 2 PUSCH configuration with a value equal to an index of a specific configuration among one or more UL grant Type 2 PUSCH configurations (i.e., ConfiguredGrantConfigType2DeactivationStateList or ConfiguredGrantConfigIndex), and when RV, MCS (modulation and coding scheme), and FDRA (frequency domain resource assignment) fields of a DCI format are all set as shown in Table 12, verification of a DCI format for UL grant Type 2 PUSCH release is achieved.

When a UE is scheduled to transmit a TB on a PUSCH by DCI, a 'Time domain resource assignment' field value of a UL grant in DCI provides a row value of a resource allocation table.

Each row of a resource allocation table defines parameters for time domain resource allocation, specifically, a slot offset (K_2) and a start and length indicator (SLIV) (or directly a starting symbol (S) and an allocation length (L)), a PUSCH mapping type, and a repetition number (when numberOfRepetitions is present) to be applied to PUSCH transmission are defined.

A resource allocation table may be configured by the higher layer parameter PUSCH-TimeDomainResourceAllocationList, or may be a predefined table.

The PUSCH-TimeDomainResourceAllocationList (i.e., resource allocation table) includes one or more PUSCH-TimeDomainResourceAllocation IEs. PUSCH-TimeDomainResourceAllocation IE is used to establish a time domain relationship between a PDCCH and a PUSCH, and configure parameters for the above-described time domain resource allocation. A 'Time domain resource assignment' field in DCI, a value of 0 indicates the first element (TimeDomainResourceAllocation) in the list (i.e., the first row of the resource allocation table), a value of 1 indicates the second element in the list, and so on.

A UE may be configured to transmit a PUSCH repeatedly. In this case, a UE repeatedly transmits the same uplink data/transport block (TB).

A PUSCH repetition transmission method can be divided into PUSCH repetition type A and PUSCH repetition type B.

When a UE is scheduled by DCI format 0_1 or DCI format 0_2, if a PUSCH repetition type (i.e., pusch-RepTypeIndicatorDCI-0-1 or pusch-RepTypeIndicatorDCI-0-2) is set to PUSCH repetition Type B (i.e., 'pusch-RepTypeB'), the UE applies the PUSCH repetition Type B procedure when determining time domain resource allocation.

Otherwise, a UE applies the PUSCH repetition Type A procedure when determining time domain resource allocation for a PUSCH scheduled by a PDCCH.

2) PUSCH repetition

- PUSCH repetition type A

PUSCH repetition type A transmission refers to a slot level PUSCH repetition in which the same uplink data (TB or CSI) is transmitted repeatedly in consecutive slots, including only one repetition in one slot.

In PUSCH repetition type A transmission, a start symbol S of a PUSCH relative to a start of a slot, and a consecutive symbols L counted from a symbol S allocated for a PUSCH, are determined from a start and length indicator (SLIV) of an indicated row of a resource allocation table.

If a repetition number configuration (i.e., numberOfRepetitions) exists in a resource allocation table, a repetition number K is determined by the repetition number configuration (i.e., numberOfRepetitions). Otherwise, a number of repetitions for an uplink TB (e.g., higher layer parameter pusch-AggregationFactor) may have one of {2, 4, 8} values. That is, the same TB can be transmitted in 2 consecutive slots, 4 slots, or 8 slots. There is one TB transmission (i.e., one TO) in each slot. If a number of repetitions is not configured (i.e., if there is no pusch-AggregationFactor), a UE applies a value of 1.

When a UE transmits a PUSCH scheduled by DCI, if the UE is configured with a repetition count > 1 (e.g., pusch-AggregationFactor > 1), the same symbol allocation is applied across consecutive slots according to the configured number of repetitions. That is, a UE repeatedly transmits an uplink TB in the same symbol over several consecutive slots according to the configured repetition number. When repetitive transmission is configured, a PUSCH is limited to a single transmission layer.

In PUSCH repetition type A or B, a redundancy version (rv_id) is determined differently for each TO of a TB. That is, based on a redundancy version indicated by DCI scheduling a PUSCH, a redundancy version applied to the n-th TO is determined according to Table 13 below.

Table 13 illustrates a redundancy version for PUSCH transmission.

[Table 13]

| rv_id indicated by the DCI scheduling the PUSCH | rv_id to be applied to nth transmission occasion (repetition Type A) or nth actual repetition (repetition Type B) | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

For PUSCH repetition type A, intra-slot frequency hopping or inter-slot frequency hopping can be configured. In the case of inter-slot frequency hopping, frequency hopping occurs at a slot boundary. In the case of intra-slot frequency hopping, the number of symbols in the first hop and the number of symbols in the second hop are configured by the base station, and frequency hopping is performed at the configured symbol boundary.

PUSCH repeat type B

PUSCH repetition type B transmission refers to a symbol level PUSCH repetition in which the same uplink data (TB or CSI) is repeatedly transmitted, including two or more repetitions in one slot.
In PUSCH repetitive type B transmission, a start symbol S of a PUSCH relative to a start of a slot, and a consecutive symbols L counted from a symbol S allocated for a PUSCH are respectively determined by a start symbol (i.e., startSymbol) and length (i.e., length) of an indicated row of a resource allocation table.
A nominal repetition number of PUSCH repetition type B is given by a repetition number configuration (i.e., numberOfRepetitions) in a resource allocation table. And, a start slot, a start symbol, an end slot, and an end symbol of the n-th nominal repetition (n=0,..., numberOfRepetitions-1) are determined based on a slot offset (K_2), an S value, and an L value to be applied to PUSCH transmission, respectively.
Here, a nominal number of repetitions means a number of repetitions indicated by RRC signaling, etc. For example, if one nominal repetition passes (including) a slot boundary (or DL/UL switching point), the one nominal repetition may be divided into two before and after the slot boundary (or DL/UL switching point), therefore an actual number of repetitions may be greater than the nominal number of repetitions.
A UE determines invalid symbol(s) for PUSCH repetition type B transmission based on predetermined methods. After determining invalid symbol(s) for PUSCH repetition Type B transmission for each nominal repetition, the remaining symbols are considered as potential valid symbol(s) for PUSCH repetition Type B transmission. If the number of potentially valid symbols for PUSCH repetition type B transmission for one nominal repetition is greater than 0, the nominal repetition includes one or more actual repetitions. Here, each actual repetition includes a contiguous set of all potentially valid symbols that can be used for PUSCH repetition type B within the slot. Except in the case of L=1, actual repetition for a single symbol is omitted, and actual repetition may be omitted under predetermined conditions.
A redundancy version applied on the n-th actual repetition (including the case where actual repetition is omitted) is determined according to Table 13 described above.
For PUSCH repetition type B, inter-repetition frequency hopping or inter-slot frequency hopping can be configured. In the case of inter-repetition frequency hopping, frequency hopping is applied per nominal number of repetitions. In the case of inter-slot frequency hopping, frequency hopping occurs at a slot boundary.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.
The AI-related descriptions and operations described below can be applied in combination with the methods proposed in the present disclosure described later, or can be supplemented to clarify the technical features of the methods proposed in the present disclosure.

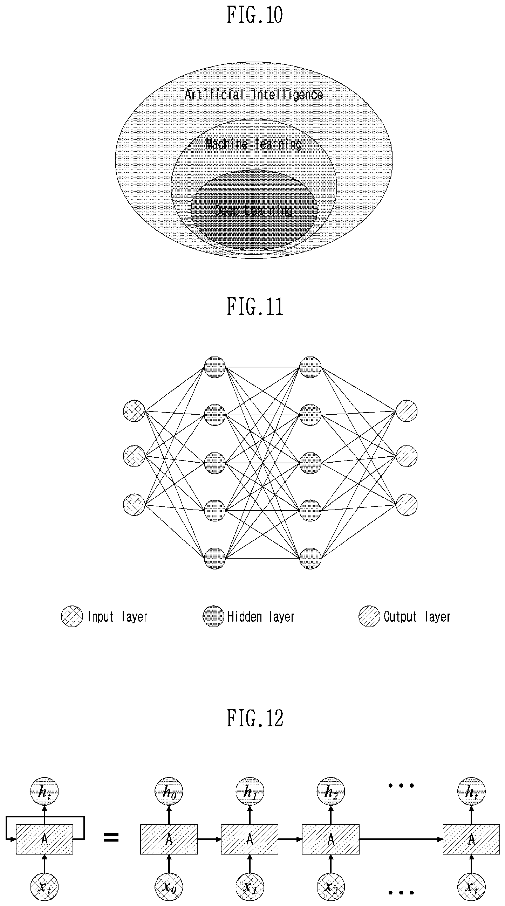

FIG. 10 illustrates a classification of artificial intelligence.
Referring to FIG. 10, artificial intelligence (AI) corresponds to all automation in which machines can replace work that should be done by humans.
Machine Learning (ML) refers to a technology in which machines learn patterns for decision-making from data on their own without explicitly programming rules.
Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).
AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression

- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 11 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 12 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 12, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

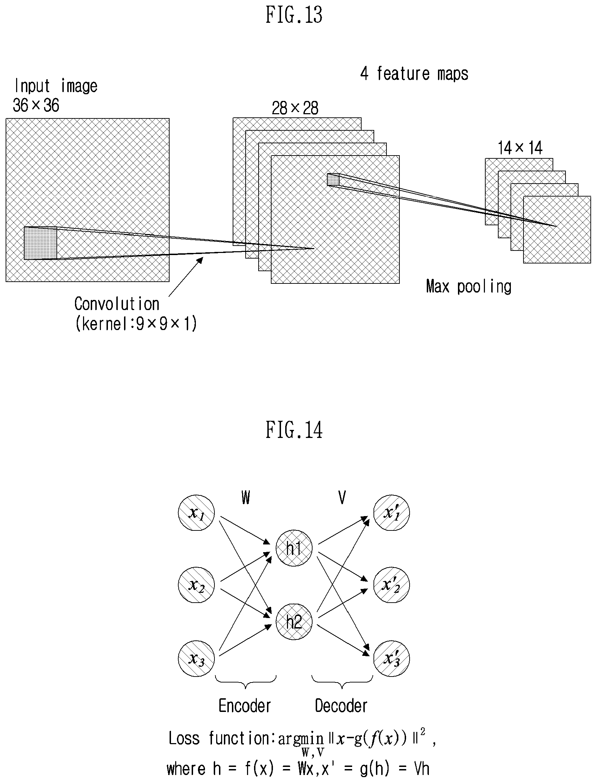

FIG. 13 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 14 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 14 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

FIG. 15 illustrates a functional framework for an AI operation.

Referring to Figure 15, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 15 may be implemented in a RAN node (e.g., base station, TRP, base station central unit (CU), etc.), a network node, a network operator's operation administration maintenance (OAM), or a UE.

Alternatively, the function illustrated in FIG. 15 may be implemented through cooperation of two or more entities among a RAN, a network node, an OAM of network operator, or a UE. For example, one entity may perform some of the functions of FIG. 15 and other entities may perform the remaining functions. As such, as some of the functions illustrated in FIG. 15 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 15 may be performed through collaboration between two or more entities among a RAN, a network node, an OAM of a network operator, or a UE. This can be referred to as a split AI operation.

FIG. 16 is a diagram illustrating split AI inference.

FIG. 16 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

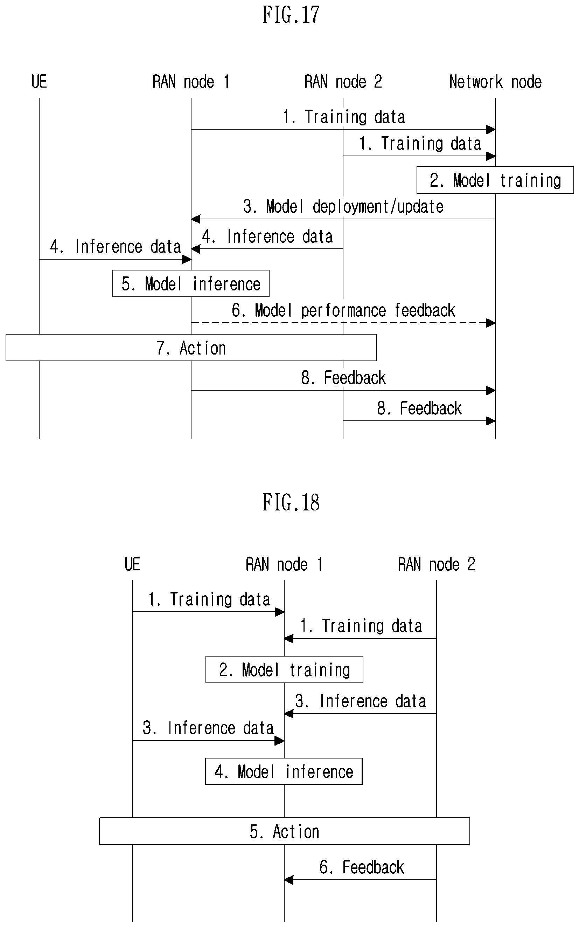

FIG. 17 illustrates an application of a functional framework in a wireless communication system.

FIG. 7 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 18 illustrates an application of a functional framework in a wireless communication system.

FIG. 18 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

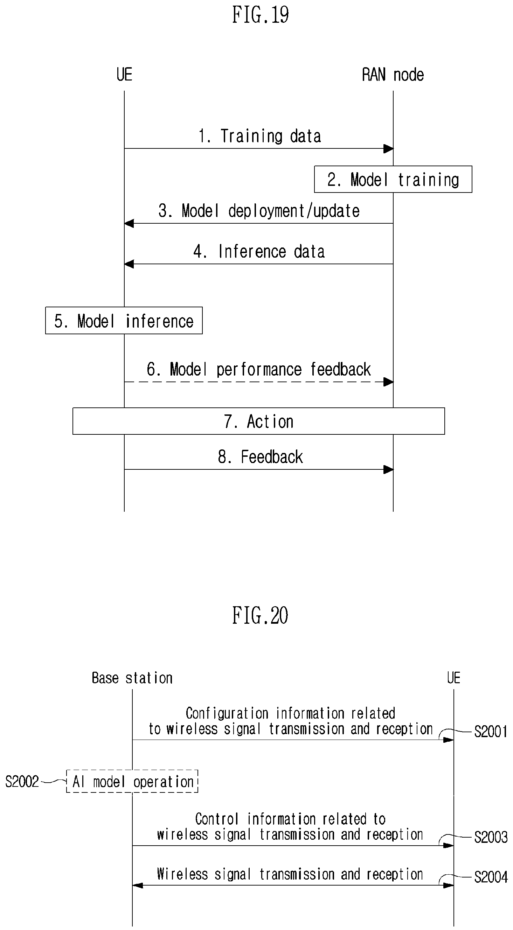

FIG. 19 illustrates an application of a functional framework in a wireless communication system.

FIG. 19 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs) .

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

## Dynamic adjustment method for resource allocation and transmission parameters

In the present disclosure, '/' means 'and', 'or', or 'and/or' depending on the context.

Due to the development of computational processing technology and AI (artificial intelligence)/ML (machine learning) technology, nodes and terminals in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each terminal, precoder/beam of base station/terminal, time/frequency resource allocation for each terminal, duplex method of each base station, etc.) according to various environmental parameters (e.g., distribution/location of base stations, distribution/location/material of buildings/furniture, etc., location/movement direction/speed of terminals, climate information, etc.). In this environment, a network will be able to quickly control/adjust interference to each terminal according to environmental parameters that change in real time. In other words, it will be possible to control a terminal so that there is very little interference for specific time/frequency/spatial (e.g., beam, layer) resources and very large interference for other specific time/frequency/spatial resources. In this case, transmission and reception can be avoided for time/frequency/spatial resources with large interference. In other words, communication can be controlled to mainly use time/frequency/spatial resources with low interference. Alternatively, (for a terminal equipped with an interference cancellation reception function) interference cancellation technology (e.g., estimating an interference beam/layer and then cancelling it) can be applied to the resource.

The following are two examples of operation scenarios through network/base station AI.

An input for AI illustrated below may correspond to the Training Data and/or Inference Data, and an output for the AI may correspond to the output of Model Inference.

1) Network/base station AI operation scenario example #1

- Input for AI: Location/distribution, requested traffic, and location movement-related information of terminals in the network/base station (e.g., a terminal that moves along a certain route like a train, a fixed terminal with little probability of location change, etc.)
- Output for AI: Predicted values for changes in location/distribution of terminals and changes in required traffic patterns

A network/base station may determine a short/mid-term time/frequency/spatial resource allocation method and/or interference control/coordination method for terminals based on the above prediction and capability information (e.g., whether it has an interference-cancelling reception function) of each terminal, etc.

For example, it may be a method of determining a pattern for a time/frequency/spatial resource grid to be occupied by each active UE (considering interference avoidance, interference alignment, etc.).

2) Network/base station AI operation scenario example #2

- Input for AI: Location/distribution, requested traffic, and location movement-related information of terminals in the network/base station (e.g., a terminal that moves along a certain route like a train, a fixed terminal with little probability of location change, etc.)
- Output for AI: short/mid-term time/frequency/spatial resource allocation method and/or interference control/adjustment method for terminals

For example, it may be a method of determining a pattern for a time/frequency/spatial resource grid to be occupied by each active UE (considering interference avoidance, interference alignment, etc.).

Even in existing wireless communication systems, technologies applied for interference control/adjustment existed. For example, LTE ICIC (Inter-Cell Interference Coordination) technology controls interference by allocating resources so that terminals in neighbor cells at a cell edge use different frequency regions (e.g. different RBs or subcarriers) to avoid inter-cell interference. In addition, the enhanced ICIC controls the use of different time regions (e.g., subframes) and configures ABS (Almost Blank Subframe) for each terminal, so that interference can be controlled through methods such as allocating resources to specific cell terminals in specific subframes. These existing methods were based on dividing time/frequency resources to be used in advance between base stations, considering the difficulty of real-time cooperation and control between base stations. This semi-static or static coordination method has limitations that make adaptive optimization difficult for environments that change in real time for each base station (required traffic, changes in distribution due to movement of terminals, changes in transmission/reception environment of surrounding base stations, etc.). As described above, when a network/base station with AI technology or a network/base station with advanced performance (through other means) is implemented, it is expected to enable dynamic optimization of interference/traffic, etc. through real-time cooperation and/or integrated control between base stations, and a resource control signaling method suitable for this is proposed in the present disclosure. In the current system structure, the present disclosure describes the 3GPP NR system as a standard, but this is not a limitation, and it is obvious that the proposed technology can be applied to other communication systems.

Among physical layer resources, there are a significant number of DL/UL resources in which resource occupancy/allocation occurs periodically (or semi-persistently) or in continuous resource units (e.g., slots), and these can be classified as follows. In order to perform dynamic interference control/adjustment, the network/base station needs a means to dynamically change resource occupancy/allocation for each terminal.

First, an uplink resource allocation method is described.

1) Type 1: Periodic resources may be configured by higher layer signaling (e.g., RRC signaling) (In addition, transmission parameters (e.g., transmission power, MCS, beam, precoding, etc.) may also be configured).

a) Type 1-1: A terminal may periodically transmit signals through corresponding resources (e.g., periodic CSI reporting through PUCCH, periodic SRS).

b) Type 1-2: A terminal can transmit a signal (e.g., PUCCH, PRACH, configured grant type-1 PUSCH for scheduling request or link recovery request) through a corresponding resource only when a specific event occurs.

2) Type 2: Periodic resources may be configured including potential resource (e.g., slot, symbol) location information, transmission period information, etc. by higher layer signaling (e.g., RRC signaling). (In addition, transmission parameters (e.g., transmission power, MCS, beam, precoding, etc.) may also be configured). Additionally, a resource may be allocated by activating/triggering a corresponding resource through a separate lower layer message (e.g., MAC-CE, DCI) (In addition, transmission parameters may also be indicated along with this).

a) Type 2-1: A terminal may periodically transmit signals through allocated resources (e.g., semi-persistent CSI reporting on PUCCH, semi-persistent SRS).

b) Type 2-2: A terminal can transmit a signal through a corresponding resource only when a specific event occurs (e.g., configured grant type-2 PUSCH)

3) Type 3: Higher layer signaling (e.g., RRC signaling) does not include potential resource (e.g., slot) location information, and a location of an allocated resource (e.g., slot) may be determined through a lower layer message (e.g., MAC-CE, DCI) that activates/triggers the resource (In addition, actual transmission parameters may also be indicated).

a) Type 3-1: A terminal can periodically/continuously transmit signals through allocated resources (e.g., semi-persistent CSI on PUSCH, HARQ-ACK on PUCCH with repetition, grant-based PUSCH with repetition).

Hereinafter, a downlink resource allocation method will be described.

1) Type 1: Periodic resources may be configured by higher layer signaling (e.g., RRC signaling) (In addition, transmission parameters (e.g., transmission power, MCS, beam, precoding, etc.) may be configured).

a) Type 1-1: A terminal may periodically receive signals (e.g., periodic NZP CSI-RS/CSI-IM (interference measurement), SSB) or apply a related operation (e.g., periodic ZP CSI-RS for PDSCH rate matching) through corresponding resources.

b) Type 1-2: A terminal can periodically monitor a base station signal through corresponding resources (e.g., PDCCH monitoring with corresponding control resource set (CORESET)/search space configuration).

2) Type 2: Periodic resources may be configured including potential resource (e.g., slot, symbol) location information, transmission period information, etc. by higher layer signaling (e.g., RRC signaling) (In addition, transmission parameters (e.g., transmission power, MCS, beam, precoding, etc.) may be configured). Additionally, a resource can be allocated by activating/triggering the resource through a separate lower layer message (e.g., MAC-CE, DCI) (In addition, transmission parameters may also be indicated).

a) Type 2-1: A terminal can periodically measure/receive signals (e.g., semi-persistent NZP CSI-RS/CSI-IM) through allocated resources or apply related operations (e.g., semi-persistent ZP CSI-RS for PDSCH rate matching).

3) Type 3: Higher layer signaling (e.g., RRC signaling) does not include potential resource (e.g., slot) location information, and a location of an allocated resource (e.g., slot) may be determined through a lower layer message (e.g., MAC-CE, DCI) that activates/triggers the resource (In addition, actual transmission parameters may also be indicated).

a) Type 3-1: A terminal can receive signals periodically/continuously through allocated resources (e.g., PDSCH with repetition).

Embodiment 1: A base station may configure a plurality of configuration information (e.g., time/frequency location-related information, sequence information, MCS (modulation/coding scheme)-related information, and/or frequency/sequence hopping-related information) of a specific DL/UL resource to a terminal through a higher layer message (e.g., RRC message). Additionally, the base station can specify/change the configuration information to be applied to the resource by designating one or part of it with a lower layer message (e.g., MAC-CE, DCI).

- The plurality of configuration information configured in the higher layer message may be information comprising an equal amount of information, or may be information comprising a differential amount of information. For example, the first configuration information may comprise configuration information at the same level as the existing configuration information, and the remaining configuration information may be (compact) information comprising only of difference value(s) (e.g., symbol/slot/RB/subcarrier offset compared to the first configuration, period difference value, MCS difference value, sequence ID difference value, etc.) from the corresponding information. For example, information indicating whether it is the first configuration information may be included in the plurality of configuration information so that a terminal can know whether it is the first configuration information, or the plurality of configuration information may include information on the number of configuration information.
- Additionally, an ACK/NACK message for that may be replaced with a HARQ-ACK message for a lower layer.
- (i) A terminal that has received a lower layer message may perform ACK (and NACK) transmission for the corresponding message to check whether the terminal has correctly received another message from a start time of applying the corresponding message. For example, if the 'lower layer message' is DCI, a procedure for a terminal to transmit an ACK (and NACK) for the DCI may be separately defined. As another example, if the 'lower layer message' is a MAC-CE, by receiving a PDSCH transmission for the MAC-CE, a configuration value (information) indicated by the corresponding message can be continuously maintained until a start time of applying the corresponding message. In other words, a terminal that has received A message can continuously maintain a configuration value (information) indicated by the A message from a start time of applying the A message until a start of applying another B message.

(ii) Alternatively, a terminal that has received the lower layer message may apply a configuration value (information) indicated in the corresponding message only for a specific defined/configured time/number of times (e.g., applies only once or to one slot, applies only for a certain time interval) after a start time of applying corresponding the message. Here, a time interval (duration) information or the number of times for applying a configuration value (information) indicated by the corresponding message may be specified/defined as a specific value, or it may be configured as a higher layer message to a terminal by a base station, or the information may be included and delivered in the lower layer message.

The 'start time of applying the lower layer message' may be specified/defined as a time after a certain time (e.g., X milliseconds (msec), Y symbol(s)/slot(s)) after receiving the lower layer message, or may be specified/defined as a time after a certain time (e.g., X msec, Y symbol(s)/slot(s)) after receiving a lower layer message and transmitting an ACK for the corresponding message (In the example above, X=0 and Y=0 are also possible).

Alternatively, the information on the 'start time of applying the lower layer message' (e.g., X value or Y value) is pre-specified/defined as a specific value, or may be configured with a higher layer message to a terminal by a base station, or the corresponding information may be included and delivered in the lower layer message.

Alternatively, the minimum value (e.g., minimum X value or minimum Y value) (or range, maximum value, etc.) of the 'start time of applying the lower layer message' may be determined differently for each terminal. That is, the more advanced terminal, the smaller value may be. Accordingly, the corresponding minimum value information (or range, maximum value) can be reported from a terminal to a base station (as UE capability information).

- It can be specified that specific (sequential) configuration information among a plurality of configuration information is applied during a duration (e.g., in the case of (i), before a start time of applying the first lower-layer message, in the case of (ii), a time outside/after a duration of applying the lower-layer message) in which the lower layer message is not applied. Hereinafter, this specific (sequential) configuration information is referred to as 'default configuration information'.
- The lower layer message may be a message applied by specifying single or multiple DL/UL resources, or a message that is uniformly applied to DL/UL resource(s) that are preconfigure/indicated to use a specific time/frequency location and/or a specific sequence for a specific time or a duration. As an example of the latter, it may be a message to collectively change resource locations for resources that overlap with a specific time/frequency resource. More specifically, a configuration information index to be applied after a change may be designated by the lower layer message, or the configuration information index to be applied may be defined/determined according to a specific predefined rule (e.g., apply the configuration information with the lowest configuration index among configuration information that does not overlap with the resource, or apply the configuration whose time/frequency location is closest to the resource and among configuration information that does not overlap with the resource). For example, when a configuration information index to be applied is determined according to the specific predefined rule, the lower layer message may correspond to a message that activates/triggers it.

- If the lower layer message is a DCI, it may be DCI dedicated to a specific terminal or a group-common DCI commonly applied to a specific terminal group. Additionally, a specific RNTI for this purpose may be assigned/defined, and the DCI may include a cyclic redundancy check (CRC) scrambled with the assigned/defined RNTI.

Alternatively, the lower layer message may be a separate physical layer message defined in a different format from the existing DCI, and a physical layer channel for transmitting these messages may be separately defined (e.g., analogous to CFI (Control Format Indicator) transmission through PCFICH (Physical Control Format Indicator Channel) in LTE).

- A plurality of configuration information may be selected/specified through the lower layer message. For example, in a specific case (e.g., PUCCH/PUSCH/PDSCH/PDCCH repetition for multi-TRP operation, etc.), a plurality of configuration information may be selected/specified in the lower layer message. In this case, a plurality of selected configuration information may be applied alternately (or sequentially circulated) for each time/frequency transmission occasion (TO)). For example, the first configuration information (e.g., configuration information with the lowest index) is applied in the first TO, the second configuration information (e.g., the configuration information with the second index from the lowest) is applied in the second TO, the first configuration information (e.g., configuration information with the lowest index) is applied in the third TO, and the second configuration information (e.g., configuration information with the second index from the lowest) may be applied In the fourth TO. Alternatively, it is the same as above in the first TO and second TO, the third configuration information (e.g., configuration information with the third index from the lowest) may be applied in the third TO, and the fourth configuration information (e.g., configuration information with the fourth index from the lowest) may be applied in the fourth TO.

In addition, in this case, a plurality of default configuration information may be defined/configured (for example, first and second configuration information, configuration information of the lowest index and second index from the lowest).

Meanwhile, the following method is proposed for the same issue. The following Embodiment may include less configuration information in a higher layer message than Embodiment 1 above.

Embodiment 2: For configuration information of a specific DL/UL resource configured as a higher layer message (e.g., RRC message) to a terminal, a base station may indicate an adjustment value (e.g., time/frequency location change information, sequence change information, MCS-related change information, and/or frequency/sequence hopping-related change information) for pre-configured information through a lower layer message (e.g., MAC-CE, DCI).

- The 'adjustment value for preconfigured information' may be difference information (e.g., symbol/slot/RB/subcarrier offset value relative to a preconfigured value, MCS offset relative to a preconfigured value, etc.) compared to a preconfigured value. Alternatively, it may be absolute value information (i.e., update information on preconfigured information) for the corresponding adjustment parameter (e.g., updated symbol/slot/RB/subcarrier index).

And/or, the corresponding information in a lower layer message (e.g., MAC-CE, DCI) may include specific time/frequency/spatial region information (hereinafter referred to as 'zone information'), and if included, the adjustment value information may be replaced with zone information. Alternatively, difference value information (e.g., symbol/slot/RB/subcarrier offset relative to zone) compared to the zone may be indicated within a lower layer message (e.g., MAC-CE, DCI) or along with the zone information.

If the zone information is indicated, a terminal may transmit and receive transmission and reception in resource(s) overlapping with the corresponding resource region (i.e., resource region indicated by zone information) by shifting it by a predetermined value or by a difference value indicated together in a lower layer message to prevent overlap with the corresponding zone (e.g., symbol/slot level shifting in the time domain, subcarrier/RB level shifting in the frequency domain). Alternatively, a terminal may transmit and receive transmission and reception in resource(s) overlapping with the corresponding resource region (i.e., resource region indicated by zone information) by adjusting a specific transmission parameter (e.g., modulation order, MCS index, Tx power (offset), (relative) power boosting factor) to a specific value or by applying a specific value. Here, the 'specific value' may be a value specified (by other system/transmission parameters) or a value configured by a base station.

In application of the above operation, it can be uniformly applied not only to resources allocated by the above-described type 1/2/3 method, but also to dynamically allocated signals (e.g., grant-based PUSCH/PUCCH, aperiodic CSI-RS/SRS). Therefore, it can be extended and applied to prevent transmission and reception from being completely performed in the corresponding zone region or to adjust a transmission and reception parameter.

- in addition, in order to check whether a terminal has correctly received the lower layer message, the terminal's ACK (and NACK) transmission for the corresponding message may be performed. For example, if the 'lower layer message' is DCI, a procedure for a terminal to transmit an ACK (and NACK) for the DCI may be separately defined. As another example, if the 'lower layer message' is a MAC-CE, the above ACK/NACK message may be replaced with a HARQ-ACK message for PDSCH transmission for the MAC-CE.
- (i) A terminal that has received the lower layer message may continuously maintain a configuration value (information) indicated by the corresponding message from a start time of applying the corresponding message until a start time of applying another message starts by receiving the another message. In other words, a terminal that has received A message can continuously maintain a configuration value (information) indicated by the A message from a start time of applying the A message until a start of applying another B message.

(ii) Alternatively, a terminal that has received the lower layer message may apply a configuration value (information) indicated in the corresponding message only for a specific defined/configured time/number of times (e.g., applies only once or to one slot, applies only for a certain time interval) after a start time of applying corresponding the message. Here, a time interval (duration) information or the number of times for applying a configuration value (information) indicated by the corresponding message may be specified/defined as a specific value, or it may be configured as a higher layer message to a terminal by a base station, or the information may be included and delivered in the lower layer message.

The 'start time of applying the lower layer message' may be specified/defined as a time after a certain time (e.g., X milliseconds (msec), Y symbol(s)/slot(s)) after receiving the lower layer message, or may be specified/defined as a time after a certain time (e.g., X msec, Y symbol(s)/slot(s)) after receiving a lower layer message and transmitting an ACK for the corresponding message (In the example above, X=0 and Y=0 are also possible).

Alternatively, the information on the 'start time of applying the lower layer message' (e.g., X value or Y value) is pre-specified/defined as a specific value, or may be configured with a higher layer message to a terminal by a base station, or the corresponding information may be included and delivered in the lower layer message.

Alternatively, the minimum value (e.g., minimum X value or minimum Y value) (or range, maximum value, etc.) of the 'start time of applying the lower layer message' may be determined differently for each terminal. That is, the more advanced terminal, the smaller value may be. Accordingly, the corresponding minimum value information (or range, maximum value) can be reported from a terminal to a base station (as UE capability information).

- The lower layer message may be a message applied by specifying single or multiple DL/UL resources. For example, it may be a message that specifies (allocates) single or multiple DL/UL resources by indicating an adjustment value for a configuration of single or multiple DL/UL resources configured in a higher layer message (e.g., RRC).
- Alternatively, the lower layer message may be a message that is uniformly applied to DL/UL resource(s) that are preconfigure/indicated (e.g., by higher layer signaling) to use a specific time/frequency/spatial location and/or a specific sequence for a specific time or a duration. In this case, for example, it may be a message to collectively change resource (start) locations by a specified value (or to a specified value) for resources that overlap with a specific time/frequency/spatial resource.
- If the lower layer message is a DCI, it may be DCI dedicated to a specific terminal or a group-common DCI commonly applied to a specific terminal group. Additionally, a specific RNTI for this purpose may be assigned/defined, and the DCI may include a cyclic redundancy check (CRC) scrambled with the assigned/defined RNTI.

Alternatively, the lower layer message may be a separate physical layer message defined in a different format from the existing DCI, and a physical layer channel for transmitting these messages may be separately defined (e.g., analogous to CFI (Control Format Indicator) transmission through PCFICH (Physical Control Format Indicator Channel) in LTE).

- A plurality of configuration information may be selected/specified through the lower layer message. For example, in a specific case (e.g., PUCCH/PUSCH/PDSCH/PDCCH repetition for multi-TRP operation, etc.), a plurality of configuration information may be selected/specified in the lower layer message. In this case, a plurality of selected configuration information may be applied alternately (or sequentially circulated) for each time/frequency transmission occasion (TO)). For example, the first configuration information (e.g., configuration information with the lowest index) is applied in the first TO, the second configuration information (e.g., the configuration information with the second index from the lowest) is applied in the second TO, the first configuration information (e.g., configuration information with the lowest index) is applied in the third TO, and the second configuration information (e.g., configuration information with the second index from the lowest) may be applied In the fourth TO. Alternatively, it is the same as above in the first TO and second TO, the third configuration information (e.g., configuration information with the third index from the lowest) may be applied in the third TO, and the fourth configuration information (e.g., configuration information with the fourth index from the lowest) may be applied in the fourth TO.

Embodiment 2 requires an implementation of overwriting configuration information of a higher layer message with a lower layer message, but reduces signaling overhead by requiring less configuration information of the higher layer message than Embodiment 1. It also has the advantage of being able to adapt more quickly to changes in the environment/situation.

In order to apply Embodiment 1 and Embodiment 2 to the above-described DL/UL resource allocation method, the following may be considered.

1) In the case of DL/UL Type1 (and Type2/Type3) resource, a separate lower layer message that can change configuration information of the resource may be configured. For example, a plurality of symbol positions (e.g., start symbol index) within a slot for periodic CSI-RS/SRS resources or a PUCCH resource or a specific CORESET ID may be configured by higher layer signaling (e.g., RRC signaling), and locations may be changed as needed with lower layer signaling (e.g., MAC-CE/DCI) (Embodiment 1). Alternatively, a position may be changed as needed by indicating a symbol offset value through lower layer signaling (e.g., MAC-CE/DCI) for a single value configured by higher layer signaling (e.g., RRC signaling) (Embodiment 2).

As another example, similarly, configuration information on a plurality of RB positions (e.g., starting RB offset/index) of corresponding resources and/or subcarrier positions (e.g., subcarrier index) within a plurality of RBs may be configured by higher layer signaling (e.g., RRC signaling), locations may be changed as needed with lower layer signaling (e.g., MAC-CE/DCI) (Embodiment 1). Alternatively, single configuration information is configured by higher layer signaling (e.g., RRC signaling), and a location can be changed as needed by indicating an offset value by lower layer signaling (e.g., MAC-CE/DCI) (Embodiment 2).

As another example, the above operation can be equivalently applied to resources for rate matching, such as a ZP CSI-RS. Here, in the case of Embodiment 1, when there is no lower layer signaling (e.g., MAC-CE/DCI) indication, the first configuration information (e.g., configuration information of the lowest index) may be applied. Additionally, the lower layer signaling (e.g., MAC-CE/DCI) may be a message that temporarily changes time/frequency location, and in this case, after a time duration (e.g., predefined or configured by the base station), the first configuration information may be applied again.

2) In the case of DL/UL Type2 (and Type3) resources, the information (configuration information to apply to the resource) may be configured through a lower layer message (e.g., MAC-CE/DCI) that activates/triggers the resource. In particular, in addition to activating/deactivating a resource, the lower layer message (e.g., MAC-CE/DCI) may be transmitted (additionally/separately) only to change the configuration of the resource.

3) In the case of DL/UL Type3 resources, since an initial resource location can be roughly configured through a lower layer message (e.g., MAC-CE/DCI) that activates/triggers the resource, the need to apply the above method may not be relatively large.

However, after the resource is activated/allocated/indicated through a lower layer message (e.g., MAC-CE/DCI) that activates/triggers the resource, a separate message/procedure may be defined to change the configuration for the resource. For example, in the case of semi-persistent CSI on a PUSCH, PUSCH/PUCCH/PDSCH repetitions, a separate lower layer message (e.g., MAC-CE/DCI) or a relevant procedure may be defined to change a resource location or change a data scrambling sequence, a frequency hopping pattern, etc. after the resource is activated. Additionally, this message or procedure may be applied in a limited way when the number of repetitions is large (for example, more than a certain value) in the case of PUCCH/PUSCH/PDSCH repetitions. For example, for especially for certain features such as higher frequency band (e.g., above 52.6 GHz) operation or coverage enhancement, a greater number of long repetitions may be supported, and the above-described message or procedure may be defined/configured for this case.

Application examples for Embodiment 1 and Embodiment 2 above will be described.

- For example, a frequency hopping pattern may be configured (Embodiment 1)/adjusted (Embodiment 2) with a lower layer message (e.g., MAC-CE/DCI). For example, by configuring/adjusting a frequency hopping pattern to avoid (i.e., don't use it) a specific RB set, a base station can utilize the interference-free resources for other terminals or other transmissions of the terminal. In this case, in addition to configuring/adjusting a frequency hopping pattern for an RB-level, it is also possible to adjust a frequency hopping pattern for a component carrier (CC)-level in the case of carrier aggregation (e.g., SRS). For example, a single or multiple CC set to perform frequency hopping is configured with higher layer signaling (e.g., RRC signaling), and through the lower layer message (e.g., MAC-CE/DCI), a set of CCs to perform frequency hopping (during a specific duration) can be designated (Embodiment 1)/adjusted (Embodiment 2).
- As another example, dynamic designation/adjustment of 'aggregation level (AL) range (e.g., the nrofCandidates parameter of the SearchSpace information element (IE) in TS 38.331)' and/or 'monitoring occasion (MO: monitoring occasion) (e.g., monitoringSlotPeriodicityAndOffset, duration, and/or monitoringSymbolsWithinSlot parameters in SearchSpace IE in TS 38.331)' as configuration information for PDCCH transmission may be performed through Embodiment 1/Embodiment 2.

In the current NR system, a plurality of (candidate) ALs, that is, an AL range, can be configured for a search space (SS: search space), and a base station transmits to a terminal by applying an AL that is determined to be necessary for actual PDCCH transmission in that range. As an example of a case where Embodiment 1 is applied for an AL range indication, a plurality of AL range sets (or +- offset value for AL) may be configured through higher layer signaling (e.g., RRC signaling) for a specific SS (set). In addition, a specific AL range set can be activated/indicated (according to changing interference situations) through lower layer messages (e.g., MAC-CE/DCI). Additionally, when Embodiment 2 is applied, an adjustment value for a preconfigured AL range may be indicated through a lower layer message (e.g., MAC-CE, DCI).

Similarly, dynamic update/adjustment of MO-related information can be performed through Embodiment 1/Embodiment 2. For example, when Embodiment 1 applies, a plurality of candidate values for at least one of a period and an offset, a duration and/or a start symbol location of the MO are configured by higher layer signaling (e.g., RRC signaling), and a specific value may be indicated by a lower layer message (e.g., MAC-CE/DCI). As another example, when Embodiment 2 is applied, an adjustment value (i.e., relative offset value) by a lower layer message (e.g., MAC-CE/DCI) for a period and an offset, a duration and/or a start symbol location of the MO configured by higher layer signaling (e.g., RRC signaling) may be indicated.

- As described above, when the activation/indication message is DCI, an ACK for the corresponding DCI can be introduced/applied in case the terminal fails to properly receive the DCI.

Alternatively, instead of introducing an ACK for DCI, it may be considered to have some AL(s)/MO overlap before and after changing an AL range set and/or MO. In this case, after a base station transmits DCI according to a changed AL range, if it is suspected that a terminal's DCI decoding failure has occurred, it can be used to (re) transmit the DCI using the overlapped AL/MO. When applying the above method to the NR system, a PDSCH rate matching mismatch issue may occur in some cases. More specifically, in some cases in NR systems AL=8 and AL=16 are monitored together, even if a PDCCH succeeds in detecting (or decoding) for AL=8, a rule is defined for performing PDSCH rate matching based on AL=16. Therefore, if an AL range is changed by the proposed method and AL=16 is excluded, PDSCH rate matching is performed based on AL=8, therefore if the corresponding dynamic change indication DCI is lost, PDSCH decoding failure may occur due to PDSCH rate matching mismatch. As a method to solve this, when AL=16 was included and then is excluded by AL range change DCI (even if DCI is normally received), even if a PDCCH succeeds in detecting for AL=8, a rule can be defined so that PDSCH rate matching is still performed based on AL=16 (for a certain period of time or until a specific event occurs). Here, the 'specific event' may be after (+ after a certain period of time) transmitting an ACK for the first DCI after changing an AL range. As another method to solve the above problem, to exclude AL=16 with AL range change DCI, AL=8 can also be excluded to prevent the occurrence of the above case.

FIG. 20 is a diagram illustrating a signaling procedure between a base station and a terminal for a wireless signal transmission and reception method according to an embodiment of the present disclosure.

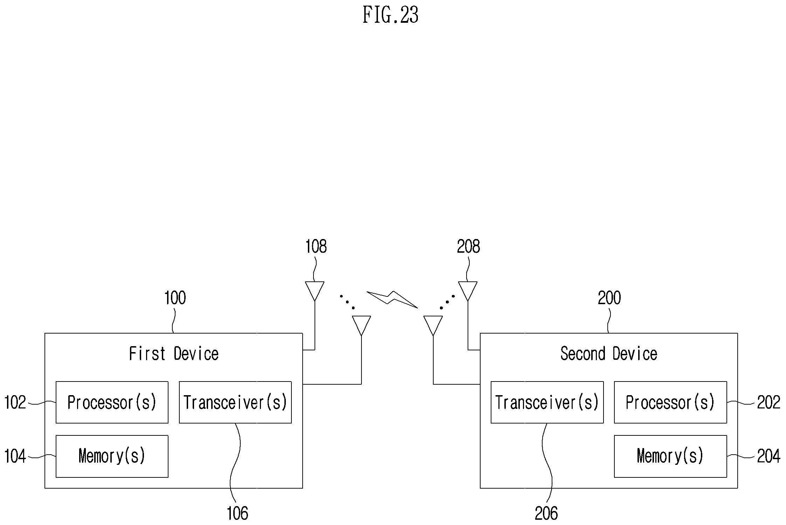

FIG. 20 illustrates signaling between a user equipment (UE) and a base station (BS) based on the previously proposed methods (e.g., any one of Embodiment 1, Embodiment 2, and detailed embodiments thereof, or a combination of one or more (detailed) embodiments). The example of FIG. 20 is just for convenience of a description, and it does not limit a scope of the present disclosure. In addition, some step(s) illustrated in FIG. 20 may be omitted according to a situation and/or a configuration, etc. In addition, the base station and the UE in FIG. 20 are only examples, and may be implemented as the device illustrated in FIG. 23 below. For example, the processor 102/202 of FIG. 23 may control transmission and reception of channels/signals/data/information, etc. using the transceiver 106/206, and may control to store transmitted or received channels/signals/data/information, etc. in the memory 104/204.

In addition, in the operation between the base station and the terminal of FIG. 20, the above-described contents may be referenced/used even if there is no separate mention.

A base station may be a general term for objects that transmit and receive data to and from a terminal. For example, the base station may be a concept including one or more transmission points (TPs), one or more transmission and reception points (TRPs), etc. Also, a TP and/or a TRP may include a panel of a base station, a transmission and reception unit, etc. In addition, "TRP" may be applied by being replaced with an expression such as a panel, an antenna array, a cell (e.g., macro cell / small cell / pico cell, etc.), a transmission point (TP), a base station (base station, gNB, etc.), etc. As described above, TRPs may be classified according to information (e.g., index, ID) on a CORESET group (or CORESET pool). For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

Referring to FIG. 20, for convenience of description, signaling between one base station and a UE is considered, however the corresponding signaling scheme may be extended and applied to signaling between multiple TRPs and multiple UEs. In the following description, a base station may be interpreted as one TRP. Alternatively, a base station may include a plurality of TRPs, or may be one cell including a plurality of TRPs.

Referring to FIG. 20, a terminal receives configuration information related to wireless signal transmission and reception from a base station (S2001).

The configuration information may include information related to network configuration (e.g., TRP configuration) / information related to M-TRP-based transmission and reception (e.g., resource allocation, etc.), etc. Here, the configuration information may be transmitted through higher layer signaling (e.g., RRC signaling, MAC-CE, etc.).

Here, the configuration information corresponds to the configuration information described in Embodiment 1 and/or Embodiment 2 described above, that is, higher layer signaling (e.g., RRC signaling). That is, the configuration information may include parameter(s) for applying the proposed method (e.g., Embodiment 1 and/or Embodiment 2).

Additionally, the configuration information may correspond to configuration information for a specific uplink signal/channel (e.g., PUCCH, PUSCH, SRS, PRACH, etc.), or may correspond to configuration information for a specific downlink signal/channel (e.g., PDCCH, PDSCH, CSI-RS, etc.). Alternatively, it may correspond to common configuration information for uplink/downlink signals/channels.

The configuration information may include information on one or more parameters related to specific downlink/uplink transmission (or configuration information on downlink/uplink resources). For example, the configuration information may include at least one of i) a time and/or frequency resource location, ii) a sequence, iii) an MCS, iv) a frequency and/or sequence hopping related parameter, v) an AL range, vi) a MO related parameter.

For example, as in Embodiment 1 above, the configuration information may be composed of a plurality of configuration information. As described above, the plurality of configuration information may be information in which each piece of information comprises an equal amount of information, or information in which each piece of information comprises a differential amount of information (confirmation information following the first confirmation information includes difference value(s) from the first confirmation information).

Alternatively, as in Embodiment 2 above, it may be composed of single configuration information.

A base station may perform an AI model operation before providing control information related to wireless signal transmission and reception to a terminal (S2002) (or before providing configuration information related to wireless signal transmission and reception differently from the figure).

Additionally, the operation of S2002 may be performed by a network node other than a base station, and a base station may receive the result.

For example, a base station or network node may generate an output using an AI Model from one or more inputs (i.e., Inference Data) by performing the Model Inference function among the AI functions previously illustrated in FIG. 15. Here, a base station or network node may perform multiple functions including the Model Inference function.

For example, a base station or network node can receive the location/distribution of terminals, requested traffic, location movement-related information, etc. (e.g., a mobile terminal along a certain route such as a train, a fixed terminal with little probability of location change, etc.) as input values, and generate output values (e.g., information for short-term/mid-term time/frequency/spatial resource allocation and/or interference control/coordination for terminals, etc.) using an AI Model based on this.

Here, an output value output by a base station or network node or information derived (or processed) from an output value may correspond to control information described later. In other words, a base station and a network node can derive an output value appropriate for the situation through learning based on information on the changing environment and provide it to a terminal as control information.

In particular, when a base station performs the Model Inference function to derive an output value, one or more procedures illustrated in FIG. 17 or 18 may be performed together in step S2002. Alternatively, when a terminal performs the Model Inference function to derive an output value, one or more procedures illustrated in FIG. 19 may be performed together in step S2002.

A terminal receives control information related to wireless signal transmission and reception from a base station (S2003).

Here, control information corresponds to control information described in Embodiment 1 and/or Embodiment 2 described above, that is, lower layer signaling (e.g., MAC-CE, DCI). That is, among a plurality of configuration information configured by configuration information based on the above-described proposed method (e.g., Embodiment 1 and/or Embodiment 2), it may include information for specifying/changing one or some configuration information to be applied by a terminal.

If the control information is DCI, it may be transmitted through a control channel (e.g., PDCCH), and if the control information is MAC-CE, it may be transmitted through a data channel (e.g., PDSCH). In the case of single DCI-based cooperative transmission, the control information may be transmitted through/using a representative TRP among multiple TRPs, and in the case of multiple DCI-based cooperative transmission, the control information may be transmitted through/using each TRP of multiple TRPs.

Additionally, the control information may be terminal-specific information or information common to a group of terminals. The control information may be a message defined in a format different from the existing DCI, and a physical layer channel for transmitting the control information may be separately defined.

In addition, the control information may correspond to scheduling information, triggering information, etc. for a specific uplink signal/channel (e.g., PUCCH, PUSCH, SRS, PRACH, etc.), or may correspond to scheduling information and indication information for a specific downlink signal/channel (e.g., PDCCH, PDSCH, CSI-RS, etc.). Alternatively, it may correspond to common control information for uplink/downlink signals/channels.

In addition, as described above, the control information may correspond to an output value using an AI Model or information derived (or processed) from an output value by a base station or network node in step S2002.

Specifically, as in Embodiment 1 above, the control information may indicate one or more specific configuration information to be applied to a terminal among the plurality of configuration information. For example, for M-TRP transmission and reception operations, configuration information is indicated for each TRP, and the control information may indicate a plurality of configuration information.

In addition, as in Embodiment 2 above, the control information may include information on an adjustment value for at least one of one or more parameters related to transmission and reception of a wireless signal configured by the configuration information. Here, an adjustment value may be an update value for the corresponding parameter or a difference value compared to the corresponding parameter. For example, when the control information indicates only adjustment values for some of the parameters among one or more parameters provided by configuration information, values provided in the configuration information for the remaining parameters may be applied to the transmission and reception of a wireless signal.

Specifically, when information on the adjustment value includes time and/or frequency region information (i.e., zone area information), transmission and reception of other wireless signals overlapping with the zone area may be performed by shifting time and/or frequency resources by a predetermined value. Additionally, transmission and reception of other wireless signals overlapping with the zone area may be performed by applying values of one or more transmission parameters to the predetermined value or changing values of one or more transmission parameters by the predetermined difference value.

In addition, when information on the adjustment value includes time and/or frequency region information (i.e., zone area information) and difference value information compared to the zone area, transmission and reception of other wireless signals overlapping with the zone area may be performed by shifting time and/or frequency resources by the difference value.

In addition, the at least one adjustment value indicated by the control information may be applied to transmission and reception of a wireless signal i) from a start time of applying the control information until a start time of applying other control information or ii) for a predetermined amount of time or number of times from a start time of applying the control information. Here, the start time of applying the control information may be defined in advance as a specific value, configured by the configuration information, or indicated by the control information. In addition, although not shown in FIG. 20, before receiving configuration information or control information related to transmission and reception of a wireless signal, a terminal may transmit to a base station capability information of a terminal including the minimum value for the start time of applying the control information.

Meanwhile, although not shown in FIG. 20, before transmitting and receiving a wireless signal, a terminal may transmit an acknowledgment/negative-acknowledgement (ACK/NACK) to a base station regarding whether reception of the control information was successful.

A terminal transmits and receives wireless signals to and from a base station based on the configuration information and the control information (S2004).

That is, a terminal can receive downlink data/signal from a base station, and conversely, a base station can transmit downlink data/signal to a terminal. Likewise, a terminal can transmit uplink data/signal to a base station, and conversely, a base station can receive uplink data/signal from a terminal.

As in Embodiment 1 above, a terminal may transmit and receive a wireless signal by applying one or more parameters of the configuration information indicated by the control information among a plurality of configuration information.

In addition, as in Embodiment 2 above, a terminal may perform transmission and reception of a wireless signal by applying the difference value indicated by the control information based on one or more parameters provided by the configuration information.

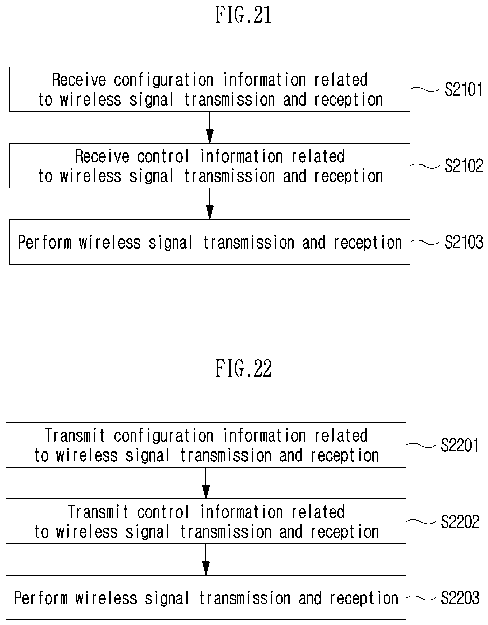

FIG. 21 is a diagram illustrating an operation of a terminal for a wireless signal transmission and reception method according to an embodiment of the present disclosure.

FIG. 21 illustrates an operation of a terminal based on the method proposed above (e.g., any one of Embodiment 1, Embodiment 2, and detailed embodiments thereof, or a combination of one or more (detailed) embodiments). The example of FIG. 21 is for convenience of description and does not limit the scope of the present disclosure. Some step(s) illustrated in FIG. 21 may be omitted depending on circumstances and/or settings. In addition, the terminal in FIG. 21 is only examples, and may be implemented as the device illustrated in FIG. 23 below. For example, the processor 102/202 of FIG. 23 may control transmission and reception of channels/signals/data/information, etc. using the transceiver 106/206, and may control to store transmitted or received channels/signals/data/information, etc. in the memory 104/204.

Additionally, the operations of FIG. 21 may be processed by one or more processors 102 and 202 of FIG. 23, and the operation of FIG. 21 may be stored in memory (e.g., one or more memories 104, 204 of FIG. 23) in the form of instructions/programs (e.g., instructions, executable code) for driving at least one processor (e.g., 102, 202) of FIG. 23.

Referring to FIG. 21, a terminal receives configuration information related to wireless signal transmission and reception from a base station (S2101).

Here, the configuration information corresponds to the configuration information described in Embodiment 1 and/or Embodiment 2 described above, that is, higher layer signaling (e.g., RRC signaling). That is, the configuration information may include parameter(s) for applying the proposed method (e.g., Embodiment 1 and/or Embodiment 2).

Additionally, the configuration information may correspond to configuration information for a specific uplink signal/channel (e.g., PUCCH, PUSCH, SRS, PRACH, etc.), or may correspond to configuration information for a specific downlink signal/channel (e.g., PDCCH, PDSCH, CSI-RS, etc.). Alternatively, it may correspond to common configuration information for uplink/downlink signals/channels.

The configuration information may include information on one or more parameters related to specific downlink/uplink transmission (or configuration information on downlink/uplink resources). For example, the configuration information may include at least one of i) a time and/or frequency resource location, ii) a sequence, iii) an MCS, iv) a frequency and/or sequence hopping related parameter, v) an AL range, vi) a MO related parameter.

For example, as in Embodiment 1 above, the configuration information may be composed of a plurality of configuration information. As described above, the plurality of configuration information may be information in which each piece of information comprises an equal amount of information, or information in which each piece of information comprises a differential amount of information (confirmation information following the first confirmation information includes difference value(s) from the first confirmation information).

Alternatively, as in Embodiment 2 above, it may be composed of single configuration information.

A terminal receives control information related to wireless signal transmission and reception from a base station (S2102).

Here, control information corresponds to control information described in Embodiment 1 and/or Embodiment 2 described above, that is, lower layer signaling (e.g., MAC-CE, DCI). That is, among a plurality of configuration information configured by configuration information based on the above-described proposed method (e.g., Embodiment 1 and/or Embodiment 2), it may include information for specifying/changing one or some configuration information to be applied by a terminal.

If the control information is DCI, it may be transmitted through a control channel (e.g., PDCCH), and if the control information is MAC-CE, it may be transmitted through a data channel (e.g., PDSCH). In the case of single DCI-based cooperative transmission, the control information may be transmitted through/using a representative TRP among multiple TRPs, and in the case of multiple DCI-based cooperative transmission, the control information may be transmitted through/using each TRP of multiple TRPs.

Additionally, the control information may be terminal-specific information or information common to a group of terminals. The control information may be a message defined in a format different from the existing DCI, and a physical layer channel for transmitting the control information may be separately defined.

In addition, the control information may correspond to scheduling information, triggering information, etc. for a specific uplink signal/channel (e.g., PUCCH, PUSCH, SRS, PRACH, etc.), or may correspond to scheduling information and indication information for a specific downlink signal/channel (e.g., PDCCH, PDSCH, CSI-RS, etc.). Alternatively, it may correspond to common control information for uplink/downlink signals/channels.

In addition, as described above, the control information may correspond to an output value using an AI Model or information derived (or processed) from an output value by a base station or network node.

Specifically, as in Embodiment 1 above, the control information may indicate one or more specific configuration information to be applied to a terminal among the plurality of configuration information. For example, for M-TRP transmission and reception operations, configuration information is indicated for each TRP, and the control information may indicate a plurality of configuration information.

In addition, as in Embodiment 2 above, the control information may include information on an adjustment value for at least one of one or more parameters related to transmission and reception of a wireless signal configured by the configuration information. Here, an adjustment value may be an update value for the corresponding parameter or a difference value compared to the corresponding parameter. For example, when the control information indicates only adjustment values for some of the parameters among one or more parameters provided by configuration information, values provided in the configuration information for the remaining parameters may be applied to the transmission and reception of a wireless signal.

Specifically, when information on the adjustment value includes time and/or frequency region information (i.e., zone area information), transmission and reception of other wireless signals overlapping with the zone area may be performed by shifting time and/or frequency resources by a predetermined value. Additionally, transmission and reception of other wireless signals overlapping with the zone area may be performed by applying values of one or more transmission parameters to the predetermined value or changing values of one or more transmission parameters by the predetermined difference value.

In addition, when information on the adjustment value includes time and/or frequency region information (i.e., zone area information) and difference value information compared to the zone area, transmission and reception of other wireless signals overlapping with the zone area may be performed by shifting time and/or frequency resources by the difference value.

In addition, the at least one adjustment value indicated by the control information may be applied to transmission and reception of a wireless signal i) from a start time of applying the control information until a start time of applying other control information or ii) for a predetermined amount of time or number of times from a start time of applying the control information. Here, the start time of applying the control information may be defined in advance as a specific value, configured by the configuration information, or indicated by the control information. In addition, although not shown in FIG. 21, before receiving configuration information or control information related to transmission and reception of a wireless signal, a terminal may transmit, to a base station, capability information of a terminal including the minimum value for the start time of applying the control information.

Meanwhile, although not shown in FIG. 21, before transmitting and receiving a wireless signal, a terminal may transmit, to a base station, an acknowledgment/negative-acknowledgement (ACK/NACK) regarding whether reception of the control information was successful.

A terminal performs transmission and reception of a wireless signal with a base station based on the configuration information and the control information (S2103).

That is, a terminal can receive downlink data/signal from a base station, and conversely, a base station can transmit downlink data/signal to a terminal. Likewise, a terminal can transmit uplink data/signal to a base station, and conversely, a base station can receive uplink data/signal from a terminal.

As in Embodiment 1 above, a terminal may perform transmission and reception of a wireless signal by applying one or more parameters of the configuration information indicated by the control information among a plurality of configuration information.

In addition, as in Embodiment 2 above, a terminal may perform transmission and reception of a wireless signal by applying the difference value indicated by the control information based on one or more parameters provided by the configuration information.

FIG. 22 is a diagram illustrating an operation of a base station for a wireless signal transmission and reception method according to an embodiment of the present disclosure.

Referring to FIG. 22, FIG. 22 illustrates an operation of a base station based on the method proposed above (e.g., any one of Embodiment 1, Embodiment 2, and detailed embodiments thereof, or a combination of one or more (detailed) embodiments). The example of FIG. 22 is for convenience of description and does not limit the scope of the present disclosure. Some step(s) illustrated in FIG. 22 may be omitted depending on circumstances and/or settings. In addition, the base station in FIG. 22 is only examples, and may be implemented as the device illustrated in FIG. 23 below. For example, the processor 102/202 of FIG. 23 may control transmission and reception of channels/signals/data/information, etc. using the transceiver 106/206, and may control to store transmitted or received channels/signals/data/information, etc. in the memory 104/204.

Additionally, the operations of FIG. 22 may be processed by one or more processors 102 and 202 of FIG. 23, and the operation of FIG. 21 may be stored in memory (e.g., one or more memories 104, 204 of FIG. 23) in the form of instructions/programs (e.g., instructions, executable code) for driving at least one processor (e.g., 102, 202) of FIG. 23.

Referring to FIG. 22, a base station transmits configuration information related to wireless signal transmission and reception to a terminal (S2201).

Here, the configuration information corresponds to the configuration information described in Embodiment 1 and/or Embodiment 2 described above, that is, higher layer signaling (e.g., RRC signaling). That is, the configuration information may include parameter(s) for applying the proposed method (e.g., Embodiment 1 and/or Embodiment 2).

Additionally, the configuration information may correspond to configuration information for a specific uplink signal/channel (e.g., PUCCH, PUSCH, SRS, PRACH, etc.), or may correspond to configuration information for a specific downlink signal/channel (e.g., PDCCH, PDSCH, CSI-RS, etc.). Alternatively, it may correspond to common configuration information for uplink/downlink signals/channels.

The configuration information may include information on one or more parameters related to specific downlink/uplink transmission (or configuration information on downlink/uplink resources). For example, the configuration information may include at least one of i) a time and/or frequency resource location, ii) a sequence, iii) an MCS, iv) a frequency and/or sequence hopping related parameter, v) an AL range, vi) a MO related parameter.

For example, as in Embodiment 1 above, the configuration information may be composed of a plurality of configuration information. As described above, the plurality of configuration information may be information in which each piece of information comprises an equal amount of information, or information in which each piece of information comprises a differential amount of information (confirmation information following the first confirmation information includes difference value(s) from the first confirmation information).

Alternatively, as in Embodiment 2 above, it may be composed of single configuration information.

A base station transmits control information related to wireless signal transmission and reception to a terminal (S2202).

Here, control information corresponds to control information described in Embodiment 1 and/or Embodiment 2 described above, that is, lower layer signaling (e.g., MAC-CE, DCI). That is, among a plurality of configuration information configured by configuration information based on the above-described proposed method (e.g., Embodiment 1 and/or Embodiment 2), it may include information for specifying/changing one or some configuration information to be applied by a terminal.

If the control information is DCI, it may be transmitted through a control channel (e.g., PDCCH), and if the control information is MAC-CE, it may be transmitted through a data channel (e.g., PDSCH). In the case of single DCI-based cooperative transmission, the control information may be transmitted through/using a representative TRP among multiple TRPs, and in the case of multiple DCI-based cooperative transmission, the control information may be transmitted through/using each TRP of multiple TRPs.

Additionally, the control information may be terminal-specific information or information common to a group of terminals. The control information may be a message defined in a format different from the existing DCI, and a physical layer channel for transmitting the control information may be separately defined.

In addition, the control information may correspond to scheduling information, triggering information, etc. for a specific uplink signal/channel (e.g., PUCCH, PUSCH, SRS, PRACH, etc.), or may correspond to scheduling information and indication information for a specific downlink signal/channel (e.g., PDCCH, PDSCH, CSI-RS, etc.). Alternatively, it may correspond to common control information for uplink/downlink signals/channels.

In addition, as described above, the control information may correspond to an output value using an AI Model or information derived (or processed) from an output value by a base station or network node.

Specifically, as in Embodiment 1 above, the control information may indicate one or more specific configuration information to be applied to a terminal among the plurality of configuration information. For example, for M-TRP transmission and reception operations, configuration information is indicated for each TRP, and the control information may indicate a plurality of configuration information.

In addition, as in Embodiment 2 above, the control information may include information on an adjustment value for at least one of one or more parameters related to transmission and reception of a wireless signal configured by the configuration information. Here, an adjustment value may be an update value for the corresponding parameter or a difference value compared to the corresponding parameter. For example, when the control information indicates only adjustment values for some of the parameters among one or more parameters provided by configuration information, values provided in the configuration information for the remaining parameters may be applied to the transmission and reception of a wireless signal.

Specifically, when information on the adjustment value includes time and/or frequency region information (i.e., zone area information), transmission and reception of other wireless signals overlapping with the zone area may be performed by shifting time and/or frequency resources by a predetermined value. Additionally, transmission and reception of other wireless signals overlapping with the zone area may be performed by applying values of one or more transmission parameters to the predetermined value or changing values of one or more transmission parameters by the predetermined difference value.

In addition, when information on the adjustment value includes time and/or frequency region information (i.e., zone area information) and difference value information compared to the zone area, transmission and reception of other wireless signals overlapping with the zone area may be performed by shifting time and/or frequency resources by the difference value.

In addition, the at least one adjustment value indicated by the control information may be applied to transmission and reception of a wireless signal i) from a start time of applying the control information until a start time of applying other control information or ii) for a predetermined amount of time or number of times from a start time of applying the control information. Here, the start time of applying the control information may be defined in advance as a specific value, configured by the configuration information, or indicated by the control information. In addition, although not shown in FIG. 22, before transmitting configuration information or control information related to transmission and reception of a wireless signal, a base station may receive, from a terminal, capability information of a terminal including the minimum value for the start time of applying the control information.

Meanwhile, although not shown in FIG. 22, before transmitting and receiving a wireless signal, a base station may receive, from a terminal, an acknowledgment/negative-acknowledgement (ACK/NACK) regarding whether reception of the control information was successful.

A base station performs transmission and reception of a wireless signal with a terminal based on the configuration information and the control information (S2203).

That is, a base station can transmit downlink data/signal to a terminal, and conversely, a terminal can receive downlink data/signal from a base station. Likewise, a base station can receive uplink data/signal from a terminal, and conversely, a terminal can transmit uplink data/signal to a base station.

As in Embodiment 1 above, a base station may perform transmission and reception of a wireless signal by applying one or more parameters of the configuration information indicated by the control information among a plurality of configuration information.

In addition, as in Embodiment 2 above, a base station may perform transmission and reception of a wireless signal by applying the difference value indicated by the control information based on one or more parameters provided by the configuration information.

General Device to which the Present Disclosure may be applied

FIG. 23 is a diagram which illustrates a block diagram of a wireless communication device according to an embodiment of the present disclosure.

In reference to FIG. 23, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/ signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

**1.** A method of performing transmission and reception of a wireless signal in a wireless communication system, the method performed by a terminal comprising:

receiving, from a base station, configuration information related to transmission and reception of a wireless signal, wherein the configuration information includes information on one or more parameters for transmission and reception of the wireless signal;
receiving, from a base station, control information related to transmission and reception of the wireless signal, wherein the control information including information on at least one adjustment value of the one or more parameters; and
performing transmission and reception of the wireless signal based on the configuration information and the control information,
wherein the adjustment value is an update value for a corresponding parameter or a difference value compared to a corresponding parameter.

**2.** The method of claim 1, wherein based on the information on the adjustment value including time and/or frequency region information, transmission and reception of other wireless signal overlapping with the time and/or frequency region are performed by shifting time and/or frequency resources by predetermined values.

3. The method of claim 2, wherein transmission and reception of other wireless signals overlapping with the time and/or frequency region is performed by applying values of one or more transmission parameters to predetermined values or changing values of one or more transmission parameters by predetermined difference values.

4. The method of claim 2, wherein based on the information on the adjustment value further including difference value information compared to the time and/or frequency region, transmission and reception of other wireless signals overlapping with the time and/or frequency region are performed by shifting time and/or frequency resources by the difference values.

5. The method of claim 1, further comprising:
transmitting an acknowledgment/negative-acknowledgement (ACK/NACK) regarding whether reception of the control information is successful.

6. The method of claim 1, wherein i) from a start time of applying the control information until a start time of applying other control information, or ii) for a predetermined time or number of times from a start time of applying the control information, the at least one adjustment value indicated by the control information is applied to transmission and reception of the wireless signal.

7. The method of claim 6, wherein the start time of applying the control information is predefined as a specific value, configured by the configuration information, or indicated by the control information.

8. The method of claim 7, further comprising:

Transmitting, to the base station, capability information of the terminal,
Wherein the capability information of the terminal includes a minimum value for the start time of applying the control information.

9. The method of claim 1, wherein the one or more parameters include at least one of parameters related to i) time and/or frequency resource locations, ii) a sequence, iii) a modulation and coding scheme (MCS), iv) frequency and/or sequence hopping, v) an aggregation level (AL) range, vi) a monitoring occasion (MO) .

10. The method of claim 1, wherein the adjustment value is an output value calculated by the base station or a network node based on one or more inputs using an artificial intelligence model.

11. A terminal of performing transmission and reception of a wireless signal in a wireless communication system, the terminal comprising:

at least one transceiver for transmitting and receiving a wireless signal; and
at least one processor for controlling the at least one transceiver,
wherein the at least one processor configured to:

receive, from a base station, configuration information related to transmission and reception of a wireless signal, wherein the configuration information includes information on one or more parameters for transmission and reception of the wireless signal;
receive, from a base station, control information related to transmission and reception of the wireless signal, wherein the control information including information on at least one adjustment value of the one or more parameters; and
perform transmission and reception of the wireless signal based on the configuration information and the control information,
wherein the adjustment value is an update value for a corresponding parameter or a difference value compared to a corresponding parameter.

12. At least one non-transitory computer-readable medium storing at least one instruction, wherein the at least one instruction executable by at least one processor controls a device of performing transmission and reception of a wireless signal to:

receive, from a base station, configuration information related to transmission and reception of a wireless signal, wherein the configuration information includes information on one or more parameters for transmission and reception of the wireless signal;
receive, from a base station, control information related to transmission and reception of the wireless signal, wherein the control information including information on at least one adjustment value of the one or more parameters; and
perform transmission and reception of the wireless signal based on the configuration information and the control information,
wherein the adjustment value is an update value for a corresponding parameter or a difference value compared to a corresponding parameter.

**13.** A processing apparatus configured to control a terminal for performing transmission and reception of a wireless signal in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information related to transmission and reception of a wireless signal, wherein the configuration information includes information on one or more parameters for transmission and reception of the wireless signal;
receiving, from a base station, control information related to transmission and reception of the wireless signal, wherein the control information including information on at least one adjustment value of the one or more parameters; and
performing transmission and reception of the wireless signal based on the configuration information and the control information,
wherein the adjustment value is an update value for a corresponding parameter or a difference value compared to a corresponding parameter.

**14.** A method of performing transmission and reception of a wireless signal in a wireless communication system, the method performed by a base station comprising:

transmitting, to a terminal, configuration information related to transmission and reception of a wireless signal, wherein the configuration information includes information on one or more parameters for transmission and reception of the wireless signal;
transmitting, to the terminal, control information related to transmission and reception of the wireless signal, wherein the control information including information on at least one adjustment value of the one or more parameters; and
performing transmission and reception of the wireless signal based on the configuration information and the control information,
wherein the adjustment value is an update value for a corresponding parameter or a difference value compared to a corresponding parameter.

**15.** A base station of performing transmission and reception of a wireless signal in a wireless communication system, the base station comprising:

at least one transceiver for transmitting and receiving a wireless signal; and
at least one processor for controlling the at least one transceiver,
wherein the at least one processor configured to:

transmit, to a terminal, configuration information related to transmission and reception of a wireless signal, wherein the configuration information includes information on one or more parameters for transmission and reception of the wireless signal;
transmit, to the terminal, control information related to transmission and reception of the wireless signal, wherein the control information including information on at least one adjustment value of the one or more parameters; and
perform transmission and reception of the wireless signal based on the configuration information and the control information,
wherein the adjustment value is an update value for a corresponding parameter or a difference value compared to a corresponding parameter.

FIG.1

AMF/UPF
AMF/UPF
NGC
NG-C/U
NG-C/U
NG-C/U
NG-C/U
Xn
gNB
gNB
NG-RAN
Xn
Xn
gNB

FIG.2

Radio Frame 10ms
Subframe 1ms
0 1 2 3 4 5 6 7 8 9
Fixed Size
Subframe ={1,2,4} Slots
Slot
0 1 2 3
Slot={7,14} Symbols
Symbol
0 1 2 3 4 5 6 7 8 9 10 11 12 13
Size depends on subcarrier spacing
Mini-Slot (URLLC)
Mini-Slot={2,4,7} Symbols

FIG.3

One Subframe
$14 \cdot 2^{\mu}$ OFDM Symbol
$k = N_{RB}^{\mu} N_{SC}^{RB} - 1$
$N_{RB}^{\mu} N_{SC}^{RB} - 1$ Subcarrier
$N_{SC}^{RB}$ Subcarrier
Resource Block
Resource Element
- In a resource grid, $(k, \bar{l})$
- In a resource block, $(k, l)$
$k = 0$
$l = 0$
$l = 14 \cdot 2^{\mu} - 1$

FIG.4

Freq.
1ms subframe:
14 symbols/slot
12 × 15 KHz
12 × 30 KHz
PRB
12 × 60 KHz
Time

FIG.5

Resource grid
A carrier
(up to 3300 subcarriers,i,e.,275 RBs)
A BWP
1 RB=12 subcarrier
1 RE
1 subcarrier
1 Symbol
k=0
l=0

INITIAL CELL SEARCH
PSS/SSS&
[DLRS]&
PBCH
S601
SYSTEM INFORMATION RECEPTION
PDCCH/
PDSCH
(BCCH)
S602
RANDOM ACCESS PROCEDURE
PRACH
S603
PDCCH/
PDSCH
S604
PUSCH
S605
PDCCH/
PDSCH
S606
GENERAL DL/UL Tx/Rx
PDCCH/
PDSCH
S607
PUSCH/
PUCCH
S608
· DL/UL ACK/NACK
· UE CQI/PMI RI REPORT
USING PUSCH AND PUCCH

FIG.6

FIG.7

TRP 1
TRP 2
Layer group #1
for CW #1
Layer group #2
for CW #1
UE1
(a)

TRP 1
TRP 2
Layer group #1
for CW #1
Layer group #2
for CW #2
UE1
(b)

FIG.8

UE
Base station
Downlink scheduling
S1401
DCI for downlink scheduling (PDCCH)
S1402
Downlink data (PDSCH)
S1403

FIG.9

UE
Base station
Uplink scheduling
S1501
DCI for uplink scheduling (PDCCH)
S1502
Uplink data (PUSCH)
S1503

FIG.10

Artificial Intelligence
Machine learning
Deep Learning

FIG.11

Input layer
Hidden layer
Output layer

FIG.12

$h_t$
A
$x_t$
=
$h_0$
$h_1$
$h_2$
$h_t$
$x_0$
$x_1$
$x_2$
$x_t$

FIG.13

Input image
36×36
4 feature maps
28×28
14×14
Max pooling
Convolution
(kernel:9×9×1)

FIG.14

W
V
$x_1$
$x_2$
$x_3$
h1
h2
$x'_1$
$x'_2$
$x'_3$
Encoder
Decoder

Loss function: $\underset{W,V}{\operatorname{argmin}} \| x - g(f(x)) \|^2$,
where h = f(x) = Wx, x' = g(h) = Vh

FIG.15

11
20
Feedback
15
Training data
Model training
Model
Model
13
deployment
/update
performance
feedback
14
40
Data
collection
12
16
Inference data
Model inference
Output
Actor
10
30
40


FIG.16

End device partition
(partial AI operation/model)
Network partition
(partial AI operation/model)
Actor
Intermediate
data
Inference
outputs
End device
Network AI end device

FIG.17

UE
RAN node 1
RAN node 2
Network node
1. Training data
1. Training data
2. Model training
3. Model deployment/update
4. Inference data
4. Inference data
5. Model inference
6. Model performance feedback
7. Action
8. Feedback
8. Feedback

FIG.18

UE
RAN node 1
RAN node 2
1. Training data
1. Training data
2. Model training
3. Inference data
3. Inference data
4. Model inference
5. Action
6. Feedback

FIG.19

UE
RAN node
1. Training data
2. Model training
3. Model deployment/update
4. Inference data
5. Model inference
6. Model performance feedback
7. Action
8. Feedback

FIG.20

Base station
UE
Configuration information related to wireless signal transmission and reception
S2001
S2002
AI model operation
Control information related to wireless signal transmission and reception
S2003
Wireless signal transmission and reception
S2004

FIG.21

Receive configuration information related to wireless signal transmission and reception
S2101
Receive control information related to wireless signal transmission and reception
S2102
Perform wireless signal transmission and reception
S2103

FIG.22

Transmit configuration information related to wireless signal transmission and reception
S2201
Transmit control information related to wireless signal transmission and reception
S2202
Perform wireless signal transmission and reception
S2203

FIG.23

100
First Device
Processor(s)
Memory(s)
Transceiver(s)
102
104
106
108
200
Second Device
Processor(s)
Memory(s)
Transceiver(s)
202
204
206
208

## INTERNATIONAL SEARCH REPORT

International application No.
**PCT/KR2022/006632**

**A. CLASSIFICATION OF SUBJECT MATTER**

**H04L 5/00**(2006.01)i; **H04L 1/00**(2006.01)i; **H04W 72/04**(2009.01)i; **H04W 72/12**(2009.01)i

According to International Patent Classification (IPC) or to both national classification and IPC

**B. FIELDS SEARCHED**

Minimum documentation searched (classification system followed by classification symbols)

H04L 5/00(2006.01); H04L 12/26(2006.01); H04L 29/00(2006.01); H04W 72/04(2009.01); H04W 72/08(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 설정 정보(configuration information), 제어 정보(control information), 파라미터(parameter), 시간-주파수 자원(time-frequency resource), 업데이트(update), 조정(adjustment), 수정 값(modification value), 적응(adaptation), 이동(shift), 중첩(overlap), 시작 시점(starting point), 변조 및 코딩 방식(modulation and coding scheme, MCS), 인공 지능(artificial intelligence), 머신 러닝(machine learning)

**C. DOCUMENTS CONSIDERED TO BE RELEVANT**

| Category* | Citation of document, with indication, where appropriate, of the relevant passages | Relevant to claim No. |
|---|---|---|
| Y | US 2020-0205161 A1 (BEIJING XIAOMI MOBILE SOFTWARE CO., LTD.) 25 June 2020 (2020-06-25) See paragraphs [0132], [0135] and [0154]-[0159]; and claims 1 and 10-11. | 1-15 |
| Y | US 2020-0396734 A1 (QUALCOMM INCORPORATED) 17 December 2020 (2020-12-17) See paragraphs [0055]-[0056] and [0060]-[0061]. | 1-15 |
| Y | WO 2020-166826 A1 (SAMSUNG ELECTRONICS CO., LTD.) 20 August 2020 (2020-08-20) See paragraph [0030]; and claims 1 and 3. | 6-9 |
| Y | WO 2020-139181 A1 (TELEFONAKTIEBOLAGET LM ERICSSON (PUBL)) 02 July 2020 (2020-07-02) See page 19, line 25 - page 20, line 17; page 22, lines 14-17 and page 29, line 8 - page 30, line 5. | 9-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 August 2022** | **17 August 2022** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT

International application No.
PCT/KR2022/006632

C. DOCUMENTS CONSIDERED TO BE RELEVANT

| Category* | Citation of document, with indication, where appropriate, of the relevant passages | Relevant to claim No. |
|---|---|---|
| A | US 2020-0245319 A1 (VIVO MOBILE COMMUNICATION CO., LTD.) 30 July 2020 (2020-07-30) See claims 1-17. | 1-15 |

Form PCT/ISA/210 (second sheet) (July 2019)

**INTERNATIONAL SEARCH REPORT**
**Information on patent family members**

International application No.
**PCT/KR2022/006632**

| Patent document cited in search report | Publication date (day/month/year) | Patent family member(s) | Publication date (day/month/year) |
|---|---|---|---|
| US 2020-0205161 A1 | 25 June 2020 | CN 108352974 A | 31 July 2018 |
| | | CN 108352974 B | 19 February 2021 |
| | | EP 3672344 A1 | 24 June 2020 |
| | | EP 3672344 A4 | 12 August 2020 |
| | | US 11337223 B2 | 17 May 2022 |
| | | WO 2019-047085 A1 | 14 March 2019 |
| US 2020-0396734 A1 | 17 December 2020 | CN 114009104 A | 01 February 2022 |
| | | EP 3984297 A1 | 20 April 2022 |
| | | US 11382098 B2 | 05 July 2022 |
| | | WO 2020-251734 A1 | 17 December 2020 |
| WO 2020-166826 A1 | 20 August 2020 | CN 111565462 A | 21 August 2020 |
| | | US 2022-0104253 A1 | 31 March 2022 |
| WO 2020-139181 A1 | 02 July 2020 | EP 3903243 A1 | 03 November 2021 |
| | | US 2022-0078637 A1 | 10 March 2022 |
| US 2020-0245319 A1 | 30 July 2020 | CN 109391428 A | 26 February 2019 |
| | | CN 109391428 B | 28 August 2020 |
| | | EP 3667991 A1 | 17 June 2020 |
| | | US 11272485 B2 | 08 March 2022 |
| | | WO 2019-029611 A1 | 14 February 2019 |

Form PCT/ISA/210 (patent family annex) (July 2019)